# EUROPÄISCHE PATENTSCHRIFT

(11) **EP 2 353 403 B1**
(45) Veröffentlichungstag und Bekanntmachung des Hinweises auf die Patenterteilung: **11.07.2012**
(21) Anmeldenummer: 10152331.4
(22) Anmeldetag: 01.02.2010
(51) Int. Cl.: A23L 1/236, A23L 1/22, A61Q 11/00

(54) **Verwendung von 1-(2,4-Dihydroxy-phenyl)-3-(3-hydroxy-4-methoxy-phenyl)-propan-1-on**
Use of 1-(2,4-dihydroxy-phenyl)-3-(3-hydroxy-4-methoxy-phenyl)-propan-1-on
Utilisation de 1-(2,4-dihydroxy-phényle)-3-(3-hydroxy-4-méthoxy-phényle)-propane-1-on

(43) Veröffentlichungstag der Anmeldung: 10.08.2011
(73) Patentinhaber: Symrise AG, 37603 Holzminden (DE)
(72) Erfinder: Backes, Michael, 37603 Holzminden (DE); Vössing, Tobias, 37688 Beverungen (DE); Ley, Jakob Peter, 37603 Holzminden (DE); Paetz, Susanne, 37671 Höxter (DE)
(74) Vertreter: Eisenführ, Speiser & Partner

(56) Entgegenhaltungen:
- WO-A1-2007/014879
- WO-A1-2007/107596
- DE-A1- 2 506 356
- DICK, WILLIAM E., JR.: "Structure-Taste Correlations for Flavans and Flavanones Conformationally Equivalent to Phylloducin" JOURNAL OF AGRICULTURAL AND FOOD CHEMISTRY, Bd. 29, 1981, Seiten 305-312, XP002589343

## Beschreibung

Die vorliegende Erfindung betrifft die Verwendung von 1-(2,4-Dihydroxy-phenyl)-3-(3-hydroxy-4-methoxy-phenyl)-propan-1-on (Formel (I)), im Folgenden Deoxyhesperetindihydrochalkon (I) genannt, wobei (I) als Hinweis auf die Formel (I) zu verstehen ist, 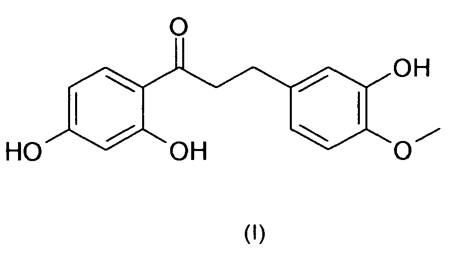 oder eines Salzes des Deoxyhesperetindihydrochalkons (I) oder einer Mischung umfassend oder bestehend aus mehreren Salzen des Deoxyhesperetindihydrochalkons (I) oder einer Mischung umfassend oder bestehend aus Deoxyhesperetindihydrochalkon (I) und einem Salz des Deoxyhesperetindihydrochalkons (I) oder mehreren Salzen des Deoxyhesperetindihydrochalkons (I), zum Beeinflussen der Stärke von Geschmackseindrücken süß schmeckender, unangenehm, insbesondere bitter, schmeckender oder sowohl süß als auch unangenehm, insbesondere bitter, schmeckender Stoffe oder Stoffgemische.

Die vorliegende Erfindung betrifft zudem Aromakompositionen umfassend Deoxyhesperetindihydrochalkon (I) oder ein Salz des Deoxyhesperetindihydrochalkons (I) oder eine Mischung umfassend oder bestehend aus mehreren Salzen des Deoxyhesperetindihydrochalkons (I) oder eine Mischung umfassend oder bestehend aus Deoxyhesperetindihydrochalkon (I) und einem Salz oder mehreren Salzen des Deoxyhesperetindihydrochalkons (I).

Ferner betrifft die vorliegende Erfindung Zubereitungen, insbesondere der Ernährung, der Nahrungsergänzung, der Mundpflege oder dem Genuss dienende oder kosmetische oder zur oralen Aufnahme bestimmte pharmazeutische Zubereitungen umfassend eine derartige Aromakomposition.

Zudem betrifft die vorliegende Erfindung ein Verfahren zur Herstellung derartiger Aromakompositionen bzw. derartiger Zubereitungen.

Außerdem betrifft die Erfindung ein Verfahren zum Beeinflussen der Stärke von Geschmackseindrücken süß schmeckender, unangenehm, insbesondere bitter, schmeckender oder sowohl süß als auch unangenehm, insbesondere bitter, schmeckender Stoffe oder Stoffgemische.

Weitere Aspekte der vorliegenden Erfindung und bevorzugte Ausgestaltungen davon ergeben sich aus der folgenden Beschreibung und den beigefügten Patentansprüchen.

Nahrungs- oder Genussmittel, die einen hohen Zuckergehalt (vor allem Sucrose (= Saccharose), Lactose, Glucose oder Fructose oder deren Mischungen) aufweisen, werden in der Regel von Verbrauchern auf Grund ihrer Süße stark präferiert. Auf der anderen Seite ist allgemein bekannt, dass ein hoher Gehalt an leicht verstoffwechselbaren Kohlenhydraten den Blutzuckerspiegel stark ansteigen lässt, zur Bildung von Fettdepots führt und letztendlich zu gesundheitlichen Problemen wie Übergewicht, Fettleibigkeit, Insulinresistenz, Altersdiabetes und deren Folgeerkrankungen führen kann. Insbesondere kommt erschwerend hinzu, dass viele der oben genannten Kohlenhydrate zusätzlich die Zahngesundheit beeinträchtigen können, da sie von bestimmten Bakteriensorten in der Mundhöhle zu beispielsweise Milchsäure abgebaut werden und den Zahnschmelz der juvenilen oder adulten Zähne angreifen können (Karies).

Daher ist es schon lange ein Ziel, den Zuckergehalt von Nahrungs- und/oder Genussmitteln auf das unbedingt nötige Maß oder darunter zu reduzieren. Eine entsprechende Maßnahme besteht im Einsatz von Süßstoffen. Das sind Substanzen, die selbst keinen oder nur einen sehr geringen kalorischen Brennwert haben und gleichzeitig einen starken süßen Geschmackseindruck verursachen; die Stoffe sind in der Regel nicht-kariogen (eine Übersicht ist z.B. zu finden in Journal of the American Dietetic Association 2004, 104 (2), 255-275).

Die sogenannten Bulk-Süßstoffe wie Sorbitol, Mannitol oder andere Zuckeralkohole sind zwar teilweise ausgezeichnete Süßungsmittel und können auch die übrigen nahrungsmitteltechnischen Eigenschaften von Zuckern teilweise ersetzen, führen aber bei zu häufiger Aufnahme bei einem Anteil der Bevölkerung zu osmotisch bedingten Verdauungsproblemen.

Nicht-nutritive, hochintensive Süßstoffe sind zwar durch ihre geringe Einsatzkonzentration gut geeignet, Süße in Nahrungsmittel zu bringen, zeigen jedoch oft geschmackliche Probleme durch ihre von Zucker verschiedenen Zeit-Intensitätsprofile (z.B. Sucralose, Stevioside, Cyclamat), einen bitteren und/oder adstringierenden Nachgeschmack (z.B. Acesulfam K, Saccharin, Stevioside, Rebaudioside) und/oder ausgeprägte zusätzliche Aromaeindrücke (z.B. Glycerrhyzinsäureammoniumsalz). Einige der Süßstoffe sind gegenüber Hitze nicht besonders stabil (z.B. Thaumatin, Brazzein, Monellin), sind nicht in allen Anwendungen stabil (z.B. Aspartam) und sind teilweise sehr langanhaltend in ihrer süßen Wirkung (starker süßer Nachgeschmack, z.B. Saccharin, Sucralose).Eine Alternative - ohne den Einsatz von nicht-nutritiven Süßstoffen - besteht darin, den Zuckergehalt von Nahrungs- und/oder Genussmitteln zu senken und sensorisch schwach oder nicht wahrnehmbare Stoffe zuzusetzen, die die Süße mittelbar oder unmittelbar verstärken, wie z.B. in WO 2005/041684 beschrieben. In EP 1 291 342 werden solche Stoffe natürlicher Herkunft (Pyridinium-Betaine) beschrieben; allerdings wird durch sie nicht selektiv der süße Geschmack, sondern auch andere Geschmacksrichtungen wie Umami oder Salzigkeit beeinflusst. Zudem sind die offenbarten Stoffe nur mit hohem Aufwand zu reinigen.

In WO 2007/014879 A1 wird der Einsatz von Hesperetin und in WO 2007/107596 A1 wird Phloretin als Verstärker des süßen Geschmacks von Zucker-reduzierten, der Ernährung oder dem Genuss dienenden Zubereitungen empfohlen. Bisweilen nachteilig ist allerdings beim Einsatz von Hesperetin und Phloretin die vergleichsweise schwach ausgeprägte Süßverstärkung in Nahrungs- und Genussmitteln wie z.B. Joghurt-Produkten, die hohe Anteile Proteine, insbesondere denaturierte Proteine, oder Polysaccharide enthalten. Hesperetin zeigt zudem den Nachteil, in sehr sauren und carbonisierten Anwendungen wie Limonaden oder Cola-Getränken nicht ausreichend wirksam zu sein.

Daher ist es wünschenswert, Stoffe zu finden, die in geringen Konzentrationen süße Geschmackseindrücke von süßen Stoffen, bevorzugt den süßen Geschmackseindruck von zuckerreduzierten Nahrungs- und Genussmitteln, insbesondere von Zuckerreduzierten Nahrungs- und Genussmitteln mit niedrigem pH-Wert, wirkungsvoll verstärken, ohne das übrige Aromaprofil negativ zu beeinflussen.

Primäre Aufgabe der vorliegenden Erfindung war es, einen Weg anzugeben zum Beeinflussen der Stärke von Geschmackseindrücken süß schmeckender und/oder unangenehm, insbesondere bitter, schmeckender und/oder sowohl süß als auch unangenehm, insbesondere bitter, schmeckender Stoffe oder Stoffgemische. Die erfindungsgemäß zum Beeinflussen der Stärke von Geschmackseindrücken zu verwendenden Stoffe sollten breit anwendbar sowie vorzugsweise leicht zugänglich sein. Weiter bevorzugt sollten sich diese Stoffe dazu eignen, sowohl einen unangenehmen Geschmackseindrucks, insbesondere einen bitteren Geschmackseindruck eines bitter schmeckenden Stoffes oder Stoffgemisches zu maskieren oder zu vermindern, als auch einen süßen Geschmackseindruck eines süß schmeckenden Stoffes oder Stoffgemisches zu verstärken, vorzugsweise synergistisch zu verstärken.

Insbesondere nicht-nutritive, hochintensive Süßstoffe zeigen oft geschmackliche Probleme (wie oben beschrieben). Insbesondere die natürlich in Stevia ssp. oder Rubus ssp. vorkommenden Steviolglycoside (beispielsweise Steviosid, Rebaudiosid A-H, Dulcoside, Rubusoside, Suavioside A, B und G-J) sind zwar sehr gute Süßstoffe, zeigen aber bei den für eine ausreichende Süßwirkung nötigen Konzentrationen (beispielsweise 400 - 600 ppm für Rebaudiosid A [Reinheit >90 %] in Erfrischungsgetränken, um eine einer Konzentration an Sucrose von 10 Gew.-% entsprechende Süße zu erreichen) schon ausgeprägten lakritzartigen und unangenehm bitteren und adstringierenden Neben-und/oder Nachgeschmack.

Insbesondere bei süßen, kalorienfreien oder nahezu kalorienfreien Getränken, die mit Hilfe solcher Süßstoffe hergestellt wurden, senkt dieser unangenehme Neben- und/oder Nachgeschmack häufig die sensorische Akzeptanz und sollte daher maskiert werden.

In der Literatur sind hierfür einige Möglichkeiten beschrieben. So werden in US 2004/0142084 Alkalimetallhydrogensulfate als Maskierungsmittel beschrieben. Diese erhöhen jedoch den Säuregehalt in Anwendungen stark. In US 3,924,017 wurden Kaffeesäurederivate zur Maskierung vorgeschlagen. Nachteilig ist, dass Kaffeesäure selbst leicht bitter schmeckt und leicht die Süße unterdrückt, so dass mehr Süßstoff eingesetzt werden müsste.

In WO 2006/087991 wird der unangenehme Geschmack mit Alkamiden wie Spilanthol unterdrückt; oft ist hier jedoch der kribbelnde Effekt dieser Stoffgruppe nicht erwünscht, so dass diese nicht breit anwendbar sind.

Eine Verbesserung der geschmacklichen Eigenschaften, insbesondere hinsichtlich des Nachgeschmack-Problems von nicht-nutritiven, hochintensiven Süßstoffen kann erreicht werden durch den Einsatz von Tanninsäure, z.B. wie in WO 98/20753 beschrieben, oder Phenolsäuren, z.B. wie in US 3,924,017 beschrieben. Allerdings sind solche Stoffe auf Grund ihrer Catechol-Einheiten nicht besonders stabil in Anwendungen und können als typische Adstringenzien einen bitteren und/oder adstringierenden Neben- und/oder Nachgeschmack verstärken.

Nicht nur die vorangehend genannten Steviolglycoside, sondern auch weitere Stoffe, die einen bitteren Geschmack bzw. Nachgeschmack aufweisen, können in Nahrungs- oder Genussmitteln deren Wert stark mindern (z.B. Flavonoidglycoside und Limonoide in Zitrus-Säften, künstliche Süßstoffe wie Aspartam oder Saccharin, hydrophobe Aminosäuren und/oder Peptide in Käse), auch wenn Stoffe mit derartigen Geschmacksrichtungen gegebenenfalls in Maßen erwünscht und für ein solches Nahrungs- oder Genussmittel charakteristisch sind (z.B. Coffein in Tee oder Kaffee, Chinin in sogenannten Bitter-Lemon-Getränken, Hopfenextrakte in Bier).

Insbesondere zur Senkung des natürlichen Gehalts an Bitterstoffen ist daher oft eine nachträgliche Behandlung nötig, beispielsweise extraktiv wie bei der Entcoffeinierung von Tee bzw. Kaffee, oder enzymatisch, wie z.B. bei der Behandlung von Orangensaft mit einer Glycosidase zur Zerstörung des bitteren Naringins oder Einsatz von speziellen Peptidasen bei der Reifung von Käse. Diese Behandlung ist belastend für das Produkt, erzeugt Abfallstoffe und bedingt z.B. auch Lösungsmittelreste und andere Rückstände (Enzyme) in den Produkten.

Besonders wichtig ist die Unterdrückung eines unangenehmen Geschmackseindrucks, insbesondere eines bitteren Geschmackseindrucks, bei vielen pharmazeutischen Wirkstoffen, da dadurch die Bereitschaft der Patienten, insbesondere bei bitterempfindlichen Patienten wie Kindern, die Zubereitung oral zu sich zu nehmen, deutlich erhöht werden kann. Viele pharmazeutische Wirkstoffe, beispielsweise Aspirin, Salicin, Paracetamol, Ambroxol oder Chinin, um nur eine sehr kleine Auswahl zur Verdeutlichung zu nennen, haben einen ausgeprägten bitteren, adstringierenden und/oder metallischen Geschmack bzw. Nachgeschmack.

Zwar sind bereits einige Stoffe bekannt, die den bitteren Geschmack (zumindest teilweise) unterdrücken können, doch zeigen diese in der Anwendung häufig starke Einschränkungen (vgl. Ley JP (2008), Masking Bitter Taste by Molecules, Chemosensory Perception, 1(1), 58-77). So wurde Lactisol als Bitter-Maskierer eingesetzt, zeigt aber gleichzeitig einen süß-maskierenden Effekt. Natriumsalze sind beispielsweise auch effektive Bitter-Maskierer, sind aber naturgemäß salzig oder tragen zu einem aus gesundheitlichen Gründen nicht erwünschten Anstieg der Natriumkonzentration im Lebensmittel bei.

Die primäre Aufgabe der vorliegenden Erfindung wird gelöst durch die Verwendung der Verbindung der Formel (I) 1-(2,4-Dihydroxy-phenyl)-3-(3-hydroxy-4-methoxy-phenyl)-propan-1-on (d.h. Deoxyhesperetindihydrochalkon), 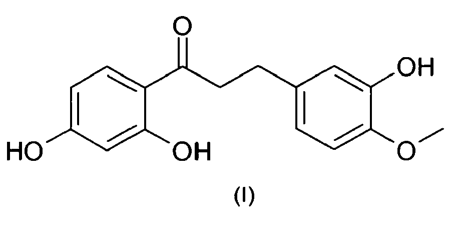 oder
- eines Salzes des Deoxyhesperetindihydrochalkons (I) oder einer Mischung umfassend oder bestehend aus mehreren Salzen des Deoxyhesperetindihydrochalkons (I)
oder
- einer Mischung umfassend oder bestehend aus Deoxyhesperetindihydrochalkon (I) und einem Salz oder mehreren Salzen des Deoxyhesperetindihydrochalkons (I),
zum Beeinflussen der Stärke von Geschmackseindrücken süß schmeckender, unangenehm, insbesondere bitter, schmeckender oder sowohl süß als auch unangenehm, insbesondere bitter, schmeckender Stoffe oder Stoffgemische.

Bevorzugt besteht dass Beeinflussen der Stärke von Geschmackseindrücken darin, dass
- der süße Geschmackseindruck eines süß schmeckenden Stoffes oder Stoffgemisches verstärkt wird
und/oder
- der unangenehme Geschmackseindruck eines unangenehm schmeckenden Stoffes oder Stoffgemisches, insbesondere der bittere Geschmackseindruck eines bitter schmeckenden Stoffes oder Stoffgemisches vermindert oder maskiert wird
und/oder
- der süße Geschmackseindruck eines sowohl süß als auch unangenehm, insbesondere bitter, schmeckenden Stoffes oder Stoffgemisches verstärkt und der unangenehme, insbesondere bittere, Geschmackseindruck des sowohl süß als auch unangenehm, insbesondere bitter, schmeckenden Stoffes oder Stoffgemisches vermindert oder maskiert wird.

Die letztere Variante der erfindungsgemäßen Beeinflussung von Geschmackseindrücken ist besonders bevorzugt.

Weiterhin bevorzugt ist eine Verwendung von Deoxyhesperetindihydrochalkon (I) oder eines Salzes des Deoxyhesperetindihydrochalkon (I) oder einer Mischung umfassend oder bestehend aus mehreren Salzen des Deoxyhesperetindihydrochalkons (I) oder einer Mischung umfassend oder bestehend aus Deoxyhesperetindihydrochalkon (I) und einem Salz oder mehreren Salzen des Deoxyhesperetindihydrochalkons (I), bei der der süße Geschmackseindruck eines süß schmeckenden Stoffes oder Stoffgemisches oder eines sowohl süß als auch unangenehm, insbesondere bitter, schmeckenden Stoffes oder Stoffgemisches synergistisch verstärkt wird.

Vorzugsweise werden Deoxyhesperetindihydrochalkon (I) oder ein Salz des Deoxyhesperetindihydrochalkons (I) oder eine Mischung umfassend oder bestehend aus mehreren Salzen des Deoxyhesperetindihydrochalkons (I) oder eine Mischung umfassend oder bestehend aus Deoxyhesperetindihydrochalkon (I) und einem Salz oder mehreren Salzen des Deoxyhesperetindihydrochalkons (I) in der oben beschriebenen Weise in einer Aromakomposition oder in einer Zubereitung ausgewählt aus der Gruppe bestehend aus der Ernährung, Nahrungsergänzung, der Mundpflege oder dem Genuss dienenden Zubereitungen, kosmetischen Zubereitungen, insbesondere zur Applikation im Bereich des Kopfes, zur oralen Aufnahme bestimmten pharmazeutischen Zubereitungen, Würzmischungen zur Verwendung in einer der in vorstehend genannten Zubereitungen, Halbfertigwaren zur Herstellung einer der in vorstehend genannten Zubereitungen verwendet.

Die Synthese der erfindungsgemäß zu verwendenden Verbindung (I) ist möglich durch Aldolkondensation von geschütztem (bevorzugt benzyl-geschütztem) 2',4'-Dihydroxyacetophenon mit geschütztem (bevorzugt benzyl-geschütztem) Isovanillin. Diese Reaktion gelingt besonders gut mit ethanolischer Kalilauge. Anschließende Reduktion mit Wasserstoff unter Zusatz von einem Katalysator (z.B. Pd/C) führt zur Deoxyhesperetindihydrochalkon (I) (vgl. Bsp. 1). Allerdings ist auch der Einsatz unterschiedlicher Schutzgruppen, anderer Basen, diverser Reduktionsmittel sowie die Durchführung einer säurekatalysierte Aldolreaktion möglich und für den Fachmann nahe liegend.

Die Verbindung (I) selbst ist literaturbekannt und wird u.a. in J. Agric. Food Chem. 1981, 29(2), 305-312 beschrieben. Dort findet man auch einen Verweis auf ein Derivat welches intensiv süß schmecken soll, allerdings wird über den Geschmack des Deoxyhesperetindihydrochalkons (I) selber nichts berichtet. Folgt man dem Verweis, wird in Acta Chimica Acad. Sci. Hung. 1978, 98(2), 225-230 ein β-D-Glycosyl Derivat als intensiv süß beschrieben. In diesem Artikel wird allerdings auch das entsprechende Aglycon - also Deoxyhesperetindihydrochalkon (I) - als schwach süß beschrieben. Allerdings lag bei diesen Untersuchungen der Focus auf der Entwicklung von potenten Süßstoffen, zu den beschriebenen Stoffen gibt es keine Hinweise auf ihre süßverstärkende Wirkung.

In diesem Zusammenhang ist interessant, dass die süßverstärkende Wirkung nicht für alle Deoxydihydrochalcone gleichermaßen gegeben ist. Im Vergleich zu den strukturell verwandten Substanzen (1)-(3) stellt Deoxyhesperetindihydrochalkon (I) überraschenderweise eindeutig die potenteste Verbindung dar (vgl. Anwendungsbeispiel 4).

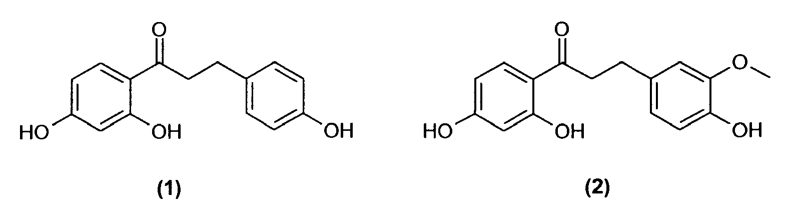

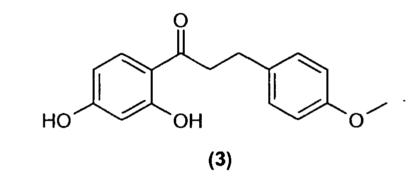

In dem Dokument WO 93/10677 wird eine Strukturklasse l-1 offenbart, welche unter anderem auch das Deoxyhesperetindihydrochalkons (I) umfassen würde.

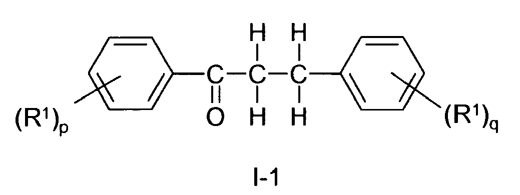

Speziell wird in diesem Dokument allerdings nur das Glycosid 1-2 des Deoxyhesperetindihydrochalkons (I) als Geschmackskorrigenz ohne ein explizites Beispiel beschrieben.

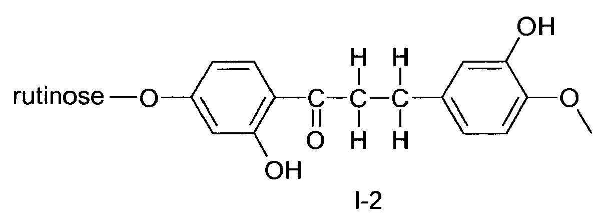

Die Zusammenhänge zwischen Struktur und Süßkraft wurden bereits 1979 untersucht (J. Chem. Senses 1979, 4(1), 35-47). Es wurde festgestellt, dass die 3-hydroxy-4-methoxyPhenylgruppe eine wichtige Voraussetzung für einen potenten Süßstoff darstellt, vertauschen der Substituenten geht mit einem Verlust der Süßkraft einher. Vorgestellt werden in dieser Veröffentlichung das intensiv süß schmeckende Dihydrochalcon (4) sowie das überraschenderweise geschmackslose Dihydrochalcon (5). **Das** Deoxyhesperetindihydrochalkon (1) selbst, sowie potentiell maskierende oder süßverstärkende Eigenschaften dieser Verbindungen werden nicht beschrieben.

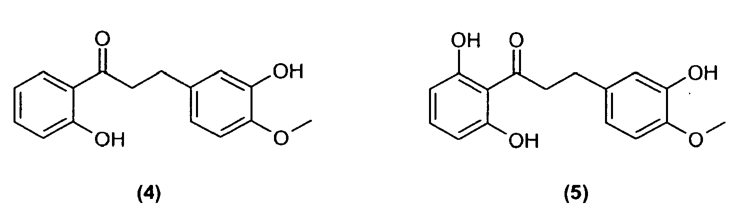

Ferner werden in dem Patent US 7,025,999 Verbindungen - unter anderem auch Dihydrochalcone - beschrieben, die in Kaugummi sensorische Effekte erzielen können. Dabei wird das Hydrochalcon (6) als intensiv süß beschrieben. Maskierende Eigenschaften werden nicht explizit beschrieben.

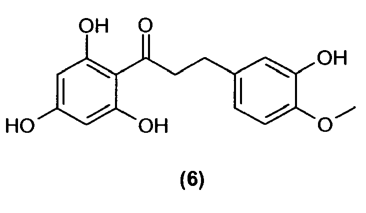

Verbindung (6) wird ebenfalls in der Veröffentlichung J. Med. Chem. 1981, 24(4), 408-428 erwähnt, welche sich ebenfalls mit Süßstoffen basierend auf einer Dihydrochalcon-Struktur beschäftigt. Die Wichtigkeit der 3-hydroxy-4-methoxy-Phenylgruppe für einen klaren Süßeindruck wird auch hier hervorgehoben, des Weiteren wird das 2,6-Dihydroxy-Substitutionsmuster am verbleibenden Aromaten als besonders wichtig für einen starken Süßeindruck vorausgesetzt.

In der Patentanmeldung EP 1 998 636 werden 4-Hydroxydihydrochalkone der Formel (7) und deren Salzen zur Verstärkung süßer sensorischer Eindrücke beschrieben. 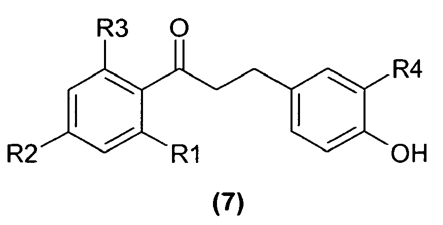 wobei
R1, R2, R3 und R4 unabhängig voneinander jeweils H, OH oder O-Alkyl (mit vorzugsweise 1 bis 4 C-Atomen, d. h. vorzugsweise C₁ bis C₄ Alkoxy) bedeuten, mit der Maßgabe, dass mindestens einer der Reste R¹, R² oder R³ OH bedeutet. Allerdings war für die hier gefundenen süß-verstärkenden Effekte eine 4-Hydroxy-Substitution erforderlich.

Bei eigenen Untersuchungen im Bereich der Flavanoide und Dihydrochalkone wurde überraschenderweise gefunden, dass Deoxyhesperetindihydrochalkon eine starke, süßverstärkende Wirkung zeigt. Im Gegensatz zu den bereits beschriebenen analogen Verbindungen ist die Verbindung selbst jedoch kaum süß. Eigene Untersuchungen haben sogar gezeigt, dass die süßverstärkende Wirkung bei höheren Konzentrationen zurückgeht (vgl. Anwendungsbeispiel 3). Diese Befunde ließen sich aus einer Gesamtschau der zitierten Dokumente nicht ableiten, insbesondere auch deshalb, weil in vielen dieser Dokumente eine Geschmacksmodulierung keine Rolle spielt.

Deoxyhesperetindihydrochalkon (I) eignet sich vorteilhafterweise besonders gut zur synergistischen Verstärkung des süßen Geschmackseindrucks eines süß schmeckenden Stoffes und ist synthetisch leicht zugänglich. Eine besonders vorteilhafte, süß verstärkende Wirkung der Verbindung (I) ergibt sich, wenn der süß schmeckende Stoff, dessen süßer Geschmackseindruck erfindungsgemäß synergistisch zu verstärken ist, ein Zucker, insbesondere Sucrose, Glucose oder Fructose oder eine Kombination zweier oder sämtlicher dieser Zucker ist. Die besonders vorteilhafte synergistisch süß verstärkende Wirkung von Deoxyhesperetindihydrochalkon (I) wird weiter unten exemplarisch anhand der Verstärkung des süßen Geschmackeindrucks von Sucrose gezeigt (vgl. Anwendungsbeispiel 3).

Zudem eignet sich Deoxyhesperetindihydrochalkon (I) überraschenderweise auch dazu, einen unangenehmen Geschmackseindruck, insbesondere einen bitteren Geschmackseindruck eines bitter schmeckenden Stoffes zu maskieren oder zu vermindern (vgl. Anwendungsbeispiel 1). Details und weitere Aspekte betreffend das Maskieren oder Vermindern von unangenehmen Geschmackseindrücken sind weiter unten beschrieben.

Bei den erfindungsgemäß zu verwendenden Salzen des Deoxyhesperetindihydrochalkons können eine, zwei oder drei Hydroxygruppen deprotoniert sein, dabei liegt eine entsprechende Menge an Gegenkationen vor, wobei diese vorzugsweise ausgewählt sind aus der Gruppe bestehend aus: einfach positiv geladenen Kationen der ersten Haupt- und Nebengruppe, Ammoniumionen, Trialkylammoniumionen, zweifach positiv geladenen Kationen der zweiten Haupt- und Nebengruppe sowie dreifach positiv geladenen Kationen der dritten Haupt- und Nebengruppe, sowie Mischungen davon. Besonders bevorzugt handelt es sich bei diesen Gegenkationen um Kationen ausgewählt aus der Gruppe bestehend aus Na⁺, K⁺, NH₄⁺, Ca²⁺, Mg²⁺ , Al³⁺ und Zn²⁺.

Dementsprechend erfindungsgemäß besonders bevorzugt ist die Verwendung eines Salzes oder einer Mischung aus
- zwei oder mehr unterschiedlichen Salzen des Deoxyhesperetindihydrochalkons (I)
oder
- Deoxyhesperetindihydrochalkon und einem oder mehreren unterschiedlichen Salzen des Deoxyhesperetindihydrochalkons (I),
wie oben beschrieben,
wobei das bzw. die Gegenkation(en) des bzw. eines, mehrerer oder sämtlicher der Salze des Deoxyhesperetindihydrochalkons (I) ausgewählt ist bzw. sind aus der Gruppe bestehend aus Na⁺, K⁺, NH₄⁺, Ca²⁺, Mg²⁺ , AI³⁺ und Zn²⁺.

Für das den Salzen zugrunde liegende Deoxyhesperetindihydrochalkon (I) gilt das vorangehend Gesagte entsprechend.

Bei eigenen Untersuchungen im Rahmen der vorliegenden Erfindung wurde überraschenderweise gefunden, dass Deoxyhesperetindihydrochalkon (I) (vorteilhafterweise auch bereits in sehr geringen Konzentrationen) den unangenehmen Geschmackseindruck, insbesondere den bitteren Geschmackseindruck einer Vielzahl von unangenehm bzw. bitter schmeckenden Stoffen (im Idealfall vollständig) maskieren oder (zumindest) vermindern kann, insbesondere von Methylxanthinen wie z.B. Coffein, Alkaloiden wie z.B. Chinin, Flavonoiden wie z.B. Catechinen, Naringin, Neohesperidin, Phenolglycosiden wie z.B. Salicin, Arbutin, Amygdalin oder Phenolen wie z.B. Hydroxytyrosol oder Oleuropein, anorganischen Salzen wie z.B. Kaliumchlorid oder Magnesiumsulfat, pharmazeutischen Wirkstoffen wie z.B. Denatoniumbenzoat oder beta-Lactamantibiotika, Steviolglycosiden wie z.B. Steviosid oder Rebaudiosiden. Die Maskierung oder Verminderung des bitteren Geschmackseindruckes der in diesem Absatz genannten Verbindungen ist auch erfindungsgemäß bevorzugt.

Dabei ist es besonders vorteilhaft, dass das erfindungsgemäß zu verwendende Deoxyhesperetindihydrochalkon (I) keine komplexierenden Eigenschaften zeigt. Deoxyhesperetindihydrochalkon (I) eignet sich demnach vorteilhafterweise besonders gut, um sowohl einen angenehmen Geschmackseindruck, insbesondere den süßen Geschmackseindruck eines süß schmeckenden Stoffes, in synergistischer Weise zu verstärken, als auch, um einen unangenehmen Geschmackseindruck, insbesondere den bitteren Geschmackseindruck eines bitter schmeckenden Stoffes zu maskieren oder vermindern, wobei bevorzugt beide Effekte gleichzeitig auftreten.

Ein weiterer Aspekt, der im Zusammenhang mit der vorliegenden Erfindung steht, betrifft daher die Verwendung
(a)
   - von Deoxyhesperetindihydrochalkon (I)
   oder
   - eines Salzes des Deoxyhesperetindihydrochalkons (I) oder einer Mischung umfassend oder bestehend aus mehreren Salzen des Deoxyhesperetindihydrochalkons (I)
   oder
   - einer Mischung umfassend oder bestehend aus Deoxyhesperetindihydrochalkon (I) und
      einem Salz oder mehreren Salzen des Deoxyhesperetindihydrochalkons (I),
   wie jeweils oben beschrieben,
   in einer Mischung umfassend
   - einen oder mehrere süß schmeckende Stoffe (b)
   und/oder
   - einen oder mehrere unangenehm, insbesondere bitter schmeckenden Stoffe (c)
   und/oder
   - einen oder mehrere sowohl süß als auch unangenehm schmeckenden Stoffe (d), (a) zur synergistischen Verstärkung des süßen Geschmacks des oder der Stoffe (b) bzw (d)
   und/oder
(b) zum Maskieren oder Vermindern des unangenehmen Geschmackseindrucks des bzw. der unangenehm schmeckenden Stoffe (c) bzw. (d).

Das vorangehend für das Deoxyhesperetindihydrochalkon (I), seine Salze oder Mischungen umfassend oder bestehend aus mehreren Salzen des Deoxyhesperetindihydrochalkons (I) oder Mischungen umfassend oder bestehend aus Deoxyhesperetindihydrochalkon (I) und einem Salz oder mehreren Salzen des Deoxyhesperetindihydrochalkons (I) Gesagte gilt hierbei entsprechend.

Vorzugsweise ist die Mischung eine Aromakomposition oder Zubereitung ausgewählt aus der Gruppe bestehend aus der Ernährung, der Nahrungsergänzung, der Mundpflege oder dem Genuss dienenden Zubereitungen, kosmetischen Zubereitungen, insbesondere zur Applikation im Bereich des Kopfes, zur oralen Aufnahme bestimmten pharmazeutischen Zubereitungen, Würzmischungen insbesondere zur Verwendung in einer der in vorstehend genannten Zubereitungen, Halbfertigwaren zur Herstellung insbesondere einer der in vorstehend genannten Zubereitungen.

Süß schmeckende Stoffe im Sinne der vorliegenden Erfindung sind insbesondere:
- süß schmeckende Kohlenhydrate
   (z.B. Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd),
- süß schmeckende Zuckeralkohole
   (z.B. Erythritol, Threitol, Arabitol, Ribitol, Xylitol, Sorbitol, Mannitol, Dulcitol, Lactitol),
- süß schmeckende Proteine
   (z.B. Miraculin, Pentaidin, Monellin, Thaumatin, Curculin, Brazzein),
- Süßstoffe
   (z.B. Magap, Natriumcyclamat, Acesulfam K, Neohesperidindihydrochalkon, Naringindihydrochalkon, Saccharin, Saccharin-Natriumsalz, Aspartam, Superaspartam, Neotam, Alitam, Sucralose, Lugduname, Carrelame, Sucrononate, Sucrooctate oder
   natürlich vorkommende Süßstoffe wie Miraculin, Curculin, Monellin, Mabinlin, Thaumatin, Curculin, Brazzein, Pentadin, D-Phenylalanin, D-Tryptophan oder aus natürlichen Quellen gewonnene Extrakte oder Fraktionen, enthaltend solche Aminosäuren bzw. Proteine, Neohesperidindihydrochalkon, Steviolgylcoside, Stevioside, Steviolbiosid, Rebaudioside, Rebaudiosid A, Rebaudiosid B, Rebaudiosid C, Rebaudiosid D, Rebaudiosid E, Rebaudiosid F, Rebaudiosid G, Rebaudiosid H, Dulcoside, Rubusoside, Suavioside A, Suavioside B, Suavioside G, Suavioside H, Suavioside I, Suavioside J, Baiyunoside 1 Baiyunoside 2, Phlomisoside 1, Phlomisoside 2, Phlomisoside 3, Phlomisoside 4, Abrusoside A, Abrusoside B, Abrusoside C, Abrusoside D, Cyclocaryoside A, Cyclocaryoside I, Oslandin, Polypodosid A, Strogin 1, Strogin, 2 Strogin 4, Selligueanin A, Dihydroquercetin-3-acetat, Perillartin, Telosmosid A₁₅, Periandrin I-V, Pterocaryoside, Cyclocaryoside, Mukurozioside, trans-Anethol, trans-Cinnamaldehyd, Bryoside, Bryonoside, Bryonodulcoside, Carnosifloside, Scandenoside, Gypenoside, Trilobatin, Phloridzin, Dihydroflavanole, Hematoxylin, Cyanin, Chlorogensäure, Albiziasaponin, Telosmoside, Gaudichaudiosid, Mogroside, Hernandulcine, Monatin, Glycyrrhetinsäure und deren Derivate und Salze und Phyllodulcin).

Süß schmeckenden Stoffe können neben dem süßen Primärgeschmack einen oder mehrere weitere Geschmackseindrücke (und/oder Geruchseindrücke), insbesondere einen nicht süßen Nachgeschmackseindruck, besitzen. Als Primärgeschmack ist dabei der Geschmackseindruck zu verstehen, der auftritt, während ein Stoff sich in direktem Kontakt mit den Schleimhäuten der Mundhöhle, insbesondere mit der Zunge befindet (in der Regel einige Sekunden bis Minuten andauernd). Als Nachgeschmack ist insbesondere der Geschmackseindruck zu verstehen, der nach Leeren der Mundhöhle durch Schlucken und/oder Ausspucken durch Anhaften von Restmengen des Stoffes bestehen bleibt und mehrere Minuten bis Stunden anhalten kann.

Insbesondere können süß schmeckende Stoffe, wie einleitend erwähnt, zusätzliche unangenehme, insbesondere bittere, Geschmackseindrücke besitzen. Zur Beeinflussung der Geschmackseindrücke solcher sowohl süß als auch unangenehm, insbesondere Bitter, schmeckende Stoffe (d) werden Deoxyhesperetin-dihydrochalkon (1) oder ein Salz des Deoxyhesperetindihydrochalkons (1) oder eine Mischung umfassend oder bestehend aus mehreren Salzen des Deoxyhesperetindihydrochalkons (1) oder eine Mischung umfassend oder bestehend aus Deoxyhesperetindihydrochalkon (1) und einem Salz oder mehreren Salzen des Deoxyhesperetindihydrochalkons (I) bevorzugt verwendet. Das Vorhandensein weiterer Geschmackseindrücke eines Stoffes, aber auch die Intensität des Primärgeschmacks selbst, kann beispielsweise in Abhängigkeit der Konzentration des Stoffes, der Temperatur, des pH-Werts und/oder der weiteren neben diesem Stoff vorliegenden Stoffe variieren.

So gilt beispielsweise für den Umgang mit Steviosid oder Rebaudiosid A oder einem anderen Steviolglycosid (wie oben beschrieben), dass die Süßkraft desselben von diversen Faktoren wie Temperatur, pH-Wert, Konzentration und dem zu süßenden Produkt abhängt. Insbesondere in Abhängigkeit von der Konzentration tritt (bei zu hohen Konzentrationen, insbesondere bei mehr als 50 ppm, insbesondere bei 50 bis 2000 ppm, ganz besonders bei 100 ppm bis 1000 ppm) ein bitterer Beigeschmack auf, der in der Regel unerwünscht ist. Steviosid oder Rebaudiosid A sind im Rahmen der vorliegenden Erfindung besonders bevorzugte sowohl süß als auch bitter schmeckende Stoffe (d).

Die unangenehm, insbesondere bitter, schmeckenden Stoffe können neben einem unangenehmen Geschmack ebenfalls weitere, (häufig nicht unangenehme) Geschmacks- und/oder Geruchsqualitäten besitzen. Als weitere, im Sinne der vorliegenden Erfindung nicht unangenehme Geschmacksqualitäten sind z.B. die Eindrücke würzig, umami, süß, salzig, sauer, scharf, kühlend, wärmend, brennend oder kribbelnd zu nennen.

Unangenehm, insbesondere bitter, schmeckende Stoffe mit zusätzlichem süßen Geschmackseindruck sind im Sinne der vorliegenden Erfindung wiederum den sowohl süß als auch unangenehm schmeckenden Stoffen zuzuordnen.

Im Rahmen der vorliegenden Erfindung sind den jeweiligen unangenehmen Geschmackseindrücken gleichermaßen entsprechende, durch einen Nachgeschmack bedingte unangenehme Geschmackseindrücke zuzuordnen.

Unangenehm schmeckende Stoffe im Sinne der vorliegenden Erfindung sind daher:
- Stoffe, die bitter, adstringierend, pappig, kalkig, staubig, trocken, mehlig, ranzig und/oder metallisch schmecken sowie
- Stoffe, die einen entsprechenden (ggf. stark anhaltenden) Nachgeschmack haben.

Ein bitterer Geschmackseindruck geht dabei oft einher mit den Geschmackseindrücken adstringierend, pappig, kalkig, staubig, trocken, mehlig, ranzig und/oder metallisch.

Stoffe (c), die unangenehm, d.h. bitter, adstringierend, pappig, kalkig, staubig, trocken, mehlig, ranzig oder metallisch schmecken, sind beispielsweise:

Xanthinalkaloide, Xanthine (Coffein, Theobromin, Theophyllin), Alkaloide (Chinin, Brucin, Strychnin, Nicotin), phenolische Glycoside (z.B. Salicin, Arbutin), Flavonoidglycoside (z.B. Hesperidin, Naringin), Chalcone oder Chalconglycoside, hydrolisierbare Tannine (Gallus- oder Elagsäureester von Kohlenhydraten, z.B. Pentagalloylglucose), nichthydrolisierbare Tannine (ggfs. galloylierte Catechine oder Epicatechine und deren Oligomeren, z.B. Proanthyocyanidine oder Procyanidine, Thearubigenin), Flavone (z.B. Quercetin, Taxifolin, Myricetin), andere Polyphenole (gamma-Oryzanol, Kaffeesäure oder deren Ester), terpenoide Bitterstoffe (z.B. Limonoide wie Limonin oder Nomilin aus Zitrusfrüchten, Lupolone und Humolone aus Hopfen, Iridoide, Secoiridoide), Absinthin aus Wermut, Amarogentin aus Enzian, metallische Salze (Kaliumchlorid, Natriumsulfat, Magnesiumsalze, Eisensalze, Aluminiumsalze, Zinksalze), pharmazeutische Wirkstoffe (z.B. Fluorchinolon-Antibiotika, Paracetamol, Aspirin, beta-Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, Panthotensäure), Denatoniumbenzoat oder andere Denatoniumsalze, Sucraloseoctaacetat, Harnstoff, ungesättigte Fettsäuren, insbesondere ungesättigte Fettsäuren in Emulsionen, Aminosäuren (z.B. Leucin, Isoleucin, Valin, Tryptophan, Prolin, Histidin, Tyrosin, Lysin oder Phenylalanin), Peptide (insbesondere Peptide mit einer Aminosäure aus der Gruppe Leucin, Isoleucin, Valin, Tryptophan, Prolin oder Phenylalanin am N- oder C-Terminus).

Stoffe, insbesondere Aroma- oder Geschmackstoffe, weisen häufig einen bitteren, adstringierenden, pappigen, kalkigen, staubigen, trockenen, mehligen, ranzigen und/oder metallischen Nachgeschmack auf, obwohl sie einen nicht unangenehmen (Primär-) Geschmack im Sinne der obigen Definition (d.h. z.B. süß, salzig, würzig, sauer, etc.) und/oder Geruch besitzen. Diese einen unangenehmen (Nach-)Geschmack aufweisenden Aroma- oder Geschmackstoffe sind unangenehm schmeckende Stoffe (c) oder insbesondere (sofern sie einen süßen (Primär-)Geschmack besitzen) sowohl süß als auch unangenehm schmeckende Stoffe (d) im Sinne der vorliegenden Erfindung. Diese Aroma- oder Geschmackstoffe sind insbesondere ausgewählt aus der Gruppe der Süßstoffe (wie oben beschrieben) oder Zuckeraustauschstoffe, d.h. vorzugsweise besitzen diese Aroma- oder Geschmackstoffe einen süßen (Primär-)Geschmack. Konkrete Beispiele für solche Aroma- oder Geschmackstoffe sind Aspartam, Neotam, Superaspartam, Saccharin, Sucralose, Tagatose, Monellin, Stevioside, Rebaudioside, vor allem Rebaudiosid A, Mogroside, insbesondere Mogrosid V, Thaumatin, Miraculin, Glycyrrhizin, Glycyrrhetinsäure oder deren Derivate, Cyclamat oder die pharmazeutisch akzeptablen Salze der vorgenannten Verbindungen. Diese Aroma- oder Geschmackstoffe sind für erfindungsgemäße Verwendungen bevorzugt einzusetzende sowohl süß als auch unangenehm/bitter schmeckende Stoffe (d). Der unangenehme Geschmackseindruck dieser Stoffe, insbesondere ein bitterer Geschmackseindruck dieser Stoffe, kann bei einer erfindungsgemäßen Verwendung (wie oben beschrieben) besonders effektiv maskiert bzw. vermindert werden.

Weitere unangenehm schmeckende Stoffe (c) bzw. sowohl süß als auch unangenehm schmeckende Stoffe (d), deren unangenehmer (Neben-)Geschmack erfindungsgemäß vorteilhafterweise maskiert oder vermindert werden kann, sind beispielsweise Aromastoffe, die einen süßen Geruchseindruck verursachen und vorzugsweise ausgewählt sind aus der Gruppe bestehend aus: Vanillin, Ethylvanillin, 2-Hydrox-4-methoxybenzaldehyd, Ethylvanillinisobutyrat (= 3-Ethoxy-4-isobutyryloxybenzaldehyd), Furaneol^{®} (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd.

Besonders bevorzugt ist eine erfindungsgemäße Verwendung (wie oben beschrieben), wobei der bitter schmeckende Stoff (c) oder der sowohl süß als auch bitter schmeckende Stoff (d), ausgewählt ist aus der Gruppe bestehend aus Steviolglycosiden, insbesondere aus Steviosid und Rebaudiosiden. Vorzugsweise ist der bitter schmeckende Stoff (c) bzw. der sowohl süß als auch bitter schmeckende Stoff (d) ausgewählt ist aus der Gruppe bestehend aus Rebaudiosid A, Rubusosid, Dulcoside, Mogroside, Phyllodulcin, Glycyrrhetinsäure oder Extrakte aus Stevia ssp. (insbesondere Stevia rebaudiana), Luo Han Guo, Rubus suavissimus, Hydrangea dulcis oder Glycyrrhyza glabra.

Durch die erfindungsgemäße Verwendung von Deoxyhesperetindihydrochalkon (I) oder einem Salz des Deoxyhesperetindihydrochalkons (I) oder einer Mischung umfassend oder bestehend aus mehreren Salzen des Deoxyhesperetindihydrochalkons (I) oder einer Mischung umfassend oder bestehend aus Deoxyhesperetindihydrochalkon (I) und einem Salz oder mehreren Salzen des Deoxyhesperetindihydrochalkons (I) kann der Gesamtgehalt an süß schmeckenden Stoffen (z.B. in der Ernährung oder dem Genuss dienenden Zubereitungen) vorteilhafterweise reduziert werden, ohne den süßen Geschmackseindruck insgesamt zu vermindern. Dies ist nicht nur aus gesundheitlichen Gründen, sondern auch hinsichtlich der geschmacklichen Eigenschaften von Bedeutung. Ein süß (und bei hohen Konzentrationen auch bitter) schmeckender Stoff wie zum Beispiel Steviosid kann nämlich in Kombination mit Deoxyhesperetin-dihydrochalkon (I) oder einem Salz des Deoxyhesperetindihydrochalkons (I) oder einer Mischung umfassend oder bestehend aus mehreren Salzen des Deoxyhesperetin-dihydrochalkons (I) oder eine Mischung umfassend oder bestehend aus Deoxyhesperetindihydrochalkon (I) und einem Salz oder mehreren Salzen des Deoxyhesperetindihydrochalkons (I) vorteilhafterweise (unter Beibehaltung des süßen Geschmackseindrucks) in so geringen Konzentrationen eingesetzt werden, dass kein oder zumindest nur ein verminderter bitterer (Bei)Geschmack des sowohl süß als auch bitter schmeckenden Stoffes wie z. B. von Steviosid wahrgenommen wird. Zudem kann der bittere Geschmackseindruck (des sowohl süß als auch bitter schmeckenden Stoffes) durch eine erfindungsgemäß bevorzugte Verwendung (wie oben beschrieben) vorteilhafterweise maskiert oder zumindest (weiter) vermindert werden.

Verschiedene Studien mit Stevia-Extrakten (Yamada A. et al. (1985): Chronic toxicity study of dietary Stevia extracts in F344 rats. In: J. Food Hyg. Soc. Japan. Bd. 26, S. 169-183; Melis, M.S. (1999): Effects of chronic administration of Stevia rebaudiana on fertility in rats. In: J. Ethnopharmacol. Bd. 67, S. 157-161) berichteten über Effekte auf das männliche Reproduktionssystem, wie zum Beispiel reduzierte Spermatogenese, vermindertes Gewicht der Samenbläschen und interstitielle Zellwucherung in den Hoden. Zudem ist bekannt, dass die Blätter von Stevia rebaudiana von paraguayanischen Indianern in Tee als Kontrazeptivum für Männer benutzt worden sind.

Durch die synergistisch süß-verstärkende Wirkung von Deoxyhesperetindihydrochalkon (I) bzw. dessen Salzen kann die für einen bestimmten Süßegrad benötigte Menge an Stevia-Extrakt bzw. Steviolglycosiden, insbesondere an Steviosid, durch Kombination mit Deoxyhesperetindihydrochalkon (I) bzw. Salzen davon (unter Beibehaltung des gewünschten Süßegrads) vorteilhafterweise reduziert werden, so dass (gegebenenfalls vorhandene) nachteilige Wirkungen (wie oben beschrieben) vermindert bzw. vermieden werden können.

Zudem kann eine Reduzierung der benötigten Menge an Stevia-Extrakt bzw. Steviolglycosiden neben den bereits genannten Vorteilen auch Kostenersparnisse mit sich bringen.

Bei einer erfindungsgemäßen Verwendung kann es vorteilhaft sein, wenn nicht alle unangenehm bzw. bitter schmeckenden Nuancen (vollständig) maskiert werden, da diese unter Umständen auch erwünscht sein können.

Bei einer erfindungsgemäßen Verwendung (wie oben beschrieben) handelt es sich auch vorzugsweise um eine Verwendung in einer zur oralen Aufnahme bestimmten pharmazeutischen, einer kosmetischen oder einer der Ernährung, der Nahrungsergänzung, der Mundpflege oder dem Genuss dienenden Zubereitung. Erfindungsgemäße Zubereitungen und deren bevorzugte Ausgestaltungen sind weiter unten beschrieben.

Eine weitere Aufgabe der vorliegenden Erfindung war es, eine Aromakomposition anzugeben, bei der die Stärke von Geschmackseindrücken süß schmeckender, und/oder unangenehm, insbesondere bitter schmeckender und/oder sowohl süß als auch unangenehm, insbesondere bitter, schmeckender Stoffe oder Stoffgemische beeinflusst ist, insbesondere der süße Geschmackseindruck eines süß schmeckenden Stoffes bevorzugt synergistisch verstärkt ist und ― sofern der süß schmeckende Stoff einen bitteren Neben- und/oder Nachgeschmack besitzt ― vorzugsweise zudem der bittere Geschmackseindruck maskiert oder vermindert ist. Ebenfalls bevorzugt ist es, dass die Stärke eines unangenehmen Geschmackseindruckes (insbesondere bitter) von Stoffen oder Stoffgemischen ohne süßeren Geschmackseindruck maskiert oder vermindert wird.

Dementsprechend wird Deoxyhesperetin-dihydrochalkon (I) oder ein Salz des Deoxyhesperetindihydrochalkons (I) oder eine Mischung umfassend oder bestehend aus mehreren Salzen des Deoxyhesperetindihydrochalkons (I) oder eine Mischung umfassend oder bestehend aus Deoxyhesperetindihydrochalkon (I) und einem Salz oder mehreren Salzen des Deoxyhesperetindihydrochalkons (I) gemäß einem weiteren Aspekt der vorliegenden Erfindung in einer Aromakomposition zur vorzugsweise synergistischen Verstärkung des süßen Geschmacks eines süß schmeckenden Stoffes und/oder zum Maskieren oder Vermindern eines bitteren Geschmackseindrucks eines bitter schmeckenden Stoffes eingesetzt. Eine solche Aromakomposition eignet sich vorteilhafterweise besonders gut zur vorzugsweise synergistischen Verstärkung eines süßen und/oder zum Maskieren oder Vermindern eines bitteren Geschmackseindrucks eines sowohl süß als auch bitter schmeckenden Stoffes.

Dementsprechend betrifft die vorliegende Erfindung auch eine Aromakomposition umfassend die oder bestehend aus den folgenden Komponenten:
(a)
   - Deoxyhesperetindihydrochalkon (I),
   oder
   - ein Salz des Deoxyhesperetindihydrochalkons (I), oder eine Mischung umfassend oder bestehend aus mehreren Salzen des Deoxyhesperetindihydrochalkons (I),
   oder
   - eine Mischung umfassend oder bestehend aus
      Deoxyhesperetindihydrochalkon (I) und
      einem Salz oder mehreren Salzen des Deoxyhesperetindihydrochalkons (I),
   sowie
(b) einen oder mehrere süß schmeckende Stoffe
   und/oder
(c) einen oder mehrere unangenehm, insbesondere bitter schmeckende Stoffe,
   und/oder
(d) einen oder mehrere sowohl süß als auch unangenehm, insbesondere bitter, schmeckende Stoffe;
   sowie gegebenenfalls
(e) eine oder mehrere Substanzen zum Maskieren oder Vermindern eines unangenehmen, insbesondere eines bitteren Geschmackeindrucks
   und/oder
(f) eine oder mehrere weitere Substanzen zum Verstärken eines süßen Geschmackeindrucks,
   und/oder
(g) eine oder mehrere Substanzen zum Maskieren oder Vermindern eines metallischen, kalkigen, sauren oder adstringierenden Geschmackseindrucks,
   und/oder
(h) eine oder mehrere Substanzen zum Verstärken eines salzigen oder Umami-Geschmackseindrucks;
   wobei die Komponenten (b)-(h) weder Deoxyhesperetindihydrochalkon (I) noch ein Salz des Deoxyhesperetindihydrochalkons (I) sind bzw. enthalten.

Ein oder die süß schmeckenden Stoffe (b) sind vorzugsweise ausgewählt aus der Gruppe bestehend aus Vanillin, Ethylvanillin, Ethylvanillinisobutyrat (= 3-Ethoxy-4-isobutyryloxybenzaldehyd), Furaneol^{®} (2,5-Dimethyl-4-hydroxy-3(2H)-furanon) und Abkömmlinge bzw. Derivate (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Derivate (z.B. Ethylmaltol), Cumarin und Derivate, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, Phenylacetaldehyd, Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Erythritol, Threitol, Arabitol, Ribitol, Xylitol, Sorbitol, Mannitol, Dulcitol und Lactitol.

Ein oder die unangenehm, insbesondere bitter schmeckenden Stoffe (c) sind vorzugsweise ausgewählt aus der Gruppe bestehend aus Xanthinalkaloide, Xanthine (Coffein, Theobromin, Theophyllin), Alkaloide (Chinin, Brucin, Strychnin, Nicotin), phenolische Glycoside (z.B. Salicin, Arbutin), Flavonoidglycoside (z.B. Hesperidin, Naringin), Chalcone oder Chalconglycoside, hydrolisierbare Tannine (Gallus- oder Elagsäureester von Kohlenhydraten, z.B. Pentagalloylglucose), nichthydrolisierbare Tannine (ggfs. galloylierte Catechine oder Epicatechine und deren Oligomeren, z.B. Proanthyocyanidine oder Procyanidine, Thearubigenin), Flavone (z.B. Quercetin, Taxifolin, Myricetin), andere Polyphenole (gamma-Oryzanol, Kaffeesäure oder deren Ester), terpenoide Bitterstoffe (z.B. Limonoide wie Limonin oder Nomilin aus Zitrusfrüchten, Lupolone und Humolone aus Hopfen, Iridoide, Secoiridoide), Absinthin aus Wermut, Amarogentin aus Enzian, metallische Salze (Kaliumchlorid, Natriumsulfat, Magnesiumsalze, Eisensalze, Aluminiumsalze, Zinksalze), pharmazeutische Wirkstoffe (z.B. Fluorchinolon-Antibiotika, Paracetamol, Aspirin, beta-Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, Panthotensäure), Denatoniumbenzoat oder andere Denatoniumsalze, Sucraloseoctaacetat, Harnstoff, ungesättigte Fettsäuren, insbesondere ungesättigte Fettsäuren in Emulsionen, Aminosäuren (z.B. Leucin, Isoleucin, Valin, Tryptophan, Prolin, Histidin, Tyrosin, Lysin oder Phenylalanin), Peptide (insbesondere Peptide mit einer Aminosäure aus der Gruppe Leucin, Isoleucin, Valin, Tryptophan, Prolin oder Phenylalanin am N- oder C-Terminus).

Ein oder die sowohl süß als auch unangenehm schmeckenden Stoffe (d) sind vorzugsweise ausgewählt aus der Gruppe bestehend aus Steviolglycosiden (insbesondere Steviosid und Rebaudiosid A), Rubusosid, Dulcoside, Mogroside, Phyllodulcin, Glycyrrhetinsäure oder Extrakte aus Stevia ssp. (insbesondere Stevia rebaudiana), Luo Han Guo, Rubus suavissimus, Hydrangea dulcis, Glycyrrhyza glabra, Magap, Natriumcyclamat, Acesulfam K, Neohesperidindihydrochalkon, Naringindihydrochalkon, Saccharin, Saccharin-Natriumsalz, Aspartam, Superaspartam, Neotam, Alitam, Sucralose, Lugduname, Carrelame, Sucrononate und Sucrooctate.

Eine oder die Substanzen (e) zum Maskieren oder Vermindern eines bitteren Geschmackeindrucks sind vorzugsweise ausgewählt aus der Gruppe bestehend aus Natriumsalzen (z.B. Natriumchlorid, Natriumlactat, Natriumcitrat, Natriumacetat, Natriumgluconoat), Homoeriodictyol oder dessen Natriumsalze, 2,4-Dihydroxybenzoesäurevanillylamid, gamma-Aminobuttersäure, Pellitorin (insbesondere wie in EP 2008530 A1 beschrieben) und Gingerdione.

Eine oder die Substanzen (f) zum Verstärken eines süßen Geschmackeindrucks, sind vorzugsweise ausgewählt ist aus der Gruppe bestehend aus Hesperetin (insbesondere wie in der WO 2007/014879 offenbart), Hydroxyphenylalkadionen (insbesondere wie in WO 2007/003527 beschrieben), Deoxybenzoinen (insbesondere wie in WO 2006/106023 und der deutschen Patentanmeldung DE10 2009 002 268.6 beschrieben), 4-Hydroxychalkonen (insbesondere wie in WO 2007/107596 beschrieben), Propenylphenylglycoside (Chavicolglycoside) (insbesondere wie in EP 1 955 601 A1 beschrieben) und Divanillinen (insbesondere wie in WO 2004/078302 beschrieben).

Die vorangehend genannten Dokumente sind bezüglich der darin offenbarten entsprechenden Verbindungen auf dem Wege der Verweisung Bestandteil dieser Anmeldung.

Eine erfindungsgemäße Aromakomposition umfasst vorzugsweise zudem zumindest eine oder mehrere weitere Substanzen (g) zum Maskieren oder Vermindern eines metallischen, kalkigen, sauren oder adstringierenden Geschmackseindrucks und/oder eine oder mehrere weitere Substanzen (h) zum Verstärken eines salzigen oder Umami-Geschmackseindrucks. Bevorzugte weitere Substanzen zum Maskieren oder Vermindern eines unangenehmen Geschmackseindrucks und/oder zum Verstärken eines angenehmen Geschmackseindrucks werden weiter unten beschrieben.

Besonders bevorzugt ist eine Aromakomposition (wie oben beschrieben), wobei der bitter schmeckende Stoff (c) oder der sowohl süß als auch bitter schmeckende Stoff (d) ausgewählt ist aus der Gruppe bestehend aus Steviolglycosiden, insbesondere aus Steviosid und Rebaudiosiden, vorzugsweise ausgewählt ist aus der Gruppe bestehend aus Rebaudiosid A, Rubusosid, Dulcoside, Mogroside, Phyllodulcin, Glycyrrhetinsäure oder Extrakte aus Stevia ssp. (insbesondere Stevia rebaudiana), Luo Han Guo, Rubus suavissimus, Hydrangea dulcis oder Glycyrrhyza glabra.

Insbesondere betrifft die vorliegende Erfindung auch eine Verwendung einer erfindungsgemäßen Aromakomposition (wie oben beschrieben) zur synergistischen Verstärkung des süßen Geschmacks eines süß schmeckenden Stoffes oder Stoffgemisches (b) und/oder zum Maskieren oder Vermindern eines unangenehmen, insbesondere bitteren Geschmackseindrucks eines unangenehm, insbesondere bitter schmeckenden Stoffes oder Stoffgemisches (c) und/oder zum Verstärken des süßen Geschmackseindrucks und/oder zum Vermindern oder Maskieren des unangenehmen, insbesondere bitteren, Geschmackseindrucks des sowohl süß als auch unangenehm, insbesondere bitter, schmeckenden Stoffes oder Stoffgemisches (d) in einer zur oralen Aufnahme bestimmten pharmazeutischen, einer kosmetischen oder einer der Ernährung, der Nahrungsergänzung, der Mundpflege oder dem Genuss dienenden Zubereitung, insbesondere in erfindungsgemäßen Zubereitungen wie unten beschrieben. Besonders bevorzugt wird eine erfindungsgemäße Aromakomposition zur Verbesserung des sensorischen Profils von süßen, oral zu konsumierenden Produkten verwendet.

Dementsprechend betrifft die vorliegende Erfindung auch eine Zubereitung umfassend eine erfindungsgemäße Aromakomposition wie oben beschrieben. Bei der erfindungsgemäßen Zubereitung handelt es sich bevorzugt um eine Zubereitung ausgewählt aus der Gruppe bestehend aus der Ernährung, der Nahrungsergänzung, der Mundpflege oder dem Genuss dienenden Zubereitungen, kosmetischen Zubereitungen, insbesondere zur Applikation im Bereich des Kopfes, zur oralen Aufnahme bestimmten pharmazeutischen Zubereitungen, Würzmischungen zur Verwendung in einer der vorstehend genannten Zubereitungen, Halbfertigwaren zur Herstellung einer der vorstehend genannten Zubereitungen,

Der Fachmann versteht, dass die einzelnen Bestandteile der erfindungsgemäßen Aromakomposition in der erfindungsgemäßen Zubereitung vorhanden sein müssen. Es ist dabei erfindungsgemäß ohne Belang, ob diese Bestandteile gemeinsam in die Zubereitung eingebracht werden oder sukzessive.

Besonders bevorzugt ist eine erfindungsgemäße der Ernährung, der Nahrungsergänzung, der Mundpflege oder dem Genuss dienende, eine kosmetische oder eine zur oralen Aufnahme bestimmte pharmazeutische Zubereitung (wie oben beschrieben), wobei die Zubereitung bezogen auf das Gesamtgewicht der Zubereitung 0,0001 Gew.-% (1 ppm) bis 0,1 Gew.-% (1000 ppm), bevorzugt 0,0001 Gew.-% (1 ppm) bis 0,05 Gew.-% (500 ppm), besonders bevorzugt 0,001 Gew.-% (10 ppm) bis 0,025 Gew.-% (250 ppm), an an Deoxyhesperetindihydrochalkon (I) und dessen Salzen umfasst.

Erfindungsgemäße Zubereitungen können auch als Halbfertigware insbesondere zur Herstellung einer der Ernährung, der Nahrungsergänzung, der Mundpflege oder dem Genuss dienenden, einer kosmetischen oder einer zur oralen Aufnahme bestimmten pharmazeutische Zubereitung oder Würzmischung vorliegen.

Besonders bevorzugt ist eine erfindungsgemäße Zubereitung (wie oben beschrieben), wobei die Zubereitung eine zur Herstellung einer der Mundpflege oder dem Genuss dienenden oder einer kosmetischen Zubereitung oder einer zur oralen Aufnahme bestimmten pharmazeutischen Zubereitung geeignete Halbfertigware ist.

Besonders bevorzugt ist eine Halbfertigware oder Würzmischung (wie oben beschrieben), wobei die Halbfertigware bezogen auf das Gesamtgewicht der Halbfertigware oder Würzmischung 0,0001 Gew.-% bis 95 Gew.-%, vorzugsweise 0,001 Gew.-% bis 95 Gew.-%, bevorzugt 0,001 bis 80 Gew.-%, besonders bevorzugt 0,01 Gew.-% bis 50 Gew.-%, an an Deoxyhesperetindihydrochalkon (I) und dessen Salzen umfasst.

Besonders bevorzugt ist eine erfindungsgemäße Zubereitung, in welcher die Gesamtmenge an (i) Deoxyhesperetindihydrochalkon (I) und (ii) dessen Salzen (Komponente (a)) in der Zubereitung ausreicht, um im Vergleich mit einer Zubereitung, die bei ansonsten identischer Zusammensetzung weder (i) Deoxyhesperetindihydrochalkon (I) noch (ii) dessen Salze umfasst, eine Steigerung des in Sucroseäquivalenten zu bestimmenden Süßeeindrucks um 10 % oder mehr, vorzugsweise 20 % oder mehr besonders bevorzugt 35% oder mehr zu vermitteln.

Der Ernährung oder dem Genuss dienende Zubereitungen im Sinne der vorliegenden Erfindung sind z.B. Backwaren (z.B. Brot, Trockenkekse, Kuchen, sonstiges Gebäck), Süßwaren (z.B. Schokoladen, Schokoladenriegelprodukte, sonstige Riegelprodukte, Fruchtgummi, Hart- und Weichkaramellen, Kaugummi), alkoholische oder nichtalkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke (z.B. Instant-Kakao-Getränke, Instant-Tee-Getränke, Instant-Kaffeegetränke), Fleischprodukte (z.B. Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (z.B. Frühstückscerealien, Müsliriegel, vorgegarte Fertigreis-Produkte), Milchprodukte (z.B. Milchgetränke, Milcheis, Joghurt, Kefir, Frischkäse, Weichkäse, Hartkäse, Trockenmilchpulver, Molke, Butter, Buttermilch, teilweise oder ganz hydrolisierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, in Essig eingelegte Gemüse, eingekochte Gemüse), Knabberartikel (z.B. gebackene oder frittierte Kartoffelchips oder Kartoffelteigprodukte, Brotteigprodukte, Extrudate auf Mais- oder Erdnussbasis), Produkte auf Fett- und Ölbasis oder Emulsionen derselben (z.B. Mayonnaise, Remoulade, Dressings, Würzzubereitungen), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden. Die Zubereitungen im Sinne der Erfindung können auch als Halbfertigware zur Herstellung weiterer der Ernährung oder dem Genuss dienenden Zubereitungen dienen. Die Zubereitungen im Sinne der Erfindung können auch in Form von Kapseln, Tabletten (nichtüberzogene sowie überzogene Tabletten, z.B. mit magensaftresistentem Überzug), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Zur oralen Aufnahme bestimmte pharmazeutische Zubereitungen im Sinne der vorliegenden Erfindung sind Zubereitungen, die z.B. in Form von Kapseln, Tabletten (nichtüberzogene sowie überzogene Tabletten, z.B. mit magensaftresistentem Überzug), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen vorliegen und als verschreibungspflichtige, apothekenpflichtige oder sonstige Arzneimittel oder als Nahrungsergänzungsmittel verwendet werden.

Der Mundpflege dienende Zubereitungen im Sinne der vorliegenden Erfindung sind insbesondere Mund- und/oder Zahnpflegemittel wie Zahnpasten, Zahngele, Zahnpulver, Mundwässer, Kaugummis und andere Mundpflegemittel. Besonders bevorzugt sind der Mundpflege dienende Zubereitungen, die einen Extrakt oder Bestandteile eines Extrakts aus Stevia ssp. enthalten. Deoxyhesperetindihydrochalkon (I) eignet sich vorteilhafterweise besonders gut, um in der Mundpflege dienenden Steviolglycoside enthaltenden Zubereitungen einen bitteren Geschmackseindruck der Steviolglycoside, insbesondere von Steviosid und/oder Rebaudiosid A zu maskieren oder zu vermindern.

Kosmetische Zubereitungen, insbesondere kosmetische Zubereitungen zur Applikation im Bereich des Kopfes, sind im Rahmen der vorliegenden Erfindung vorzugsweise kosmetische Zubereitungen, die zumindest einen unangenehm, insbesondere einen bitter schmeckenden Stoff (c) beinhalten und selbst bei sachgemäßer Auftragung auf die Haut mit der Mundhöhle in Kontakt treten können. Solche Zubereitungen sind beispielsweise kosmetische Zubereitungen zur Applikation im Bereich des Kopfes wie Seifen, andere Reinigungs- oder Pflegemittel für den Gesichtsbereich, Gesichtscremes, -lotionen oder - salben, Sonnenschutzmittel, Bartreinigungs- oder -pflegemittel, Rasierschäume, -seifen oder -gele, Lippenstifte oder andere Lippenkosmetika oder Lippenpflegemittel.

Besonders bevorzugt betrifft die vorliegende Erfindung eine erfindungsgemäße Zubereitung (wie oben beschrieben), die als Bestandteil einen oder mehrere sowohl süß als auch bitter schmeckende Stoffe (d) umfasst, wobei die Gesamtmenge an Deoxyhesperetindihydrochalkon (I) bzw. Salzen des Deoxyhesperetindihydrochalkons (I) in der Zubereitung ausreicht, sowohl den süßen Geschmackseindruck des bzw. der sowohl süß als auch bitter schmeckenden Stoffe (d) synergistisch zu verstärken als auch den bitteren Geschmackseindruck des bzw. der sowohl süß als auch bitter schmeckenden Stoffe (d) zu maskieren oder vermindern.

Besonders bevorzugt ist eine erfindungsgemäße Zubereitung (wie oben beschrieben), insbesondere eine der Ernährung, dem Genuss oder der Mundpflege dienende Zubereitung, wobei einer, mehrere oder vorzugsweise sämtliche der sowohl süß als auch bitter schmeckenden Stoffe (d) ausgewählt sind aus der Gruppe bestehend aus Steviolglycosiden, insbesondere aus Steviosid und Rebaudiosid A, vorzugsweise ausgewählt sind aus der Gruppe bestehend aus Rebaudiosid A, Rubusosid, Dulcoside, Mogroside, Phyllodulcin, Glycyrrhetinsäure oder Extrakte aus Stevia ssp. (insbesondere Stevia rebaudiana), Luo Han Guo, Rubus suavissimus, Hydrangea dulcis oder Glycyrrhyza glabra.

Weiter bevorzugt ist eine erfindungsgemäße Zubereitung (wie oben beschrieben), in welcher die Gesamtmenge an bitter schmeckenden Stoffen (c) und/oder sowohl süß als auch bitter schmeckenden Stoffen (d) in der Zubereitung ausreicht, um im Vergleich mit einer Zubereitung, die bei ansonsten identischer Zusammensetzung weder (i) Deoxyhesperetindihydrochalkon (I) noch (ii) dessen Salze umfasst, als bitterer Geschmack wahrgenommen zu werden, und die Gesamtmenge an (i) Deoxyhesperetindihydrochalkon (I) und (ii) dessen Salzen (Komponente (a)) in der Zubereitung ausreicht, um den bitteren Geschmack des oder der bitter schmeckenden Stoffe (c) bzw. des oder der sowohl süß als auch bitter schmeckenden Stoffe (d) zu maskieren oder im Vergleich mit einer Zubereitung, die bei ansonsten identischer Zusammensetzung weder (i) Deoxyhesperetindihydrochalkon (I) noch (ii) dessen Salze umfasst, zu vermindern.

Eine erfindungsgemäße Zubereitung umfasst vorzugsweise zudem zumindest eine weitere Substanz zum Maskieren oder Vermindern eines bitteren, metallischen, kalkigen, sauren oder adstringierenden Geschmackseindrucks und/oder zum Verstärken eines süßen, salzigen oder Umami-Geschmackseindrucks.

Bevorzugt ist auch eine erfindungsgemäße Zubereitung, insbesondere einer der Ernährung, der Mundpflege oder dem Genuss dienende oder kosmetische oder eine zur oralen Aufnahme bestimmte pharmazeutische Zubereitung oder Halbfertigware (wie jeweils oben beschrieben), umfassend eine erfindungsgemäße Aromakomposition (wie oben beschrieben), wobei der, Anteil der erfindungsgemäßen Aromakomposition an der erfindungsgemäßen Zubereitung 0,000001 Gew.-% bis 95 Gew.-%, bezogen auf das Gesamtgewicht der Zubereitung beträgt.

In einer erfindungsgemäßen Zubereitung können zudem übliche Wirk-, Grund-, Hilfs- und Zusatzstoffe für die Ernährung, der Mundpflege oder dem Genuss dienende, kosmetische oder orale pharmazeutische Zubereitungen (d.h. zur oralen Anwendung bestimmte pharmazeutische Zubereitungen) oder kosmetische Zubereitungen (insbesondere solche zur Applikation im Bereich des Kopfes) in Mengen von 0,9 bis 99,999999 Gew.-%, vorzugsweise 10 bis 80 Gew.-%, bezogen auf das Gesamtgewicht der Zubereitung, enthalten sein. Insbesondere kann eine erfindungsgemäße Zubereitung Wasser in einer Menge bis zu 99,999999 Gew.-%, vorzugsweise 5 bis 80 Gew.-%, bezogen auf das Gesamtgewicht der Zubereitung, enthalten.

Die erfindungsgemäße Herstellung erfindungsgemäßer Aromakompositionen bzw. Zubereitungen umfasst die Schritte
(1) Bereitstellen der folgenden Komponenten:
   (a)
      - Deoxyhesperetindihydrochalkon (I)
      oder
      - ein Salz des Deoxyhesperetindihydrochalkons (I) oder eine Mischung umfassend oder bestehend aus mehreren Salzen des Deoxyhesperetindihydrochalkons (I)
      oder
      - eine Mischung umfassend oder bestehend aus Deoxyhesperetindihydrochalkon (I) und
         einem Salz oder mehreren Salzen des Deoxyhesperetindihydrochalkons (I),
      sowie
   (b) einen oder mehrere weitere süß schmeckende Stoffe
      und/oder
   (c) einen oder mehrere unangenehm schmeckende Stoffe
      und/oder
   (d) einen oder mehrere sowohl süß als auch unangenehm schmeckende Stoffe; sowie weitere Komponenten der Aromakomposition bzw. der Zubereitung,
      wobei die Komponenten (b)-(d) und die weiteren Komponenten weder Deoxyhesperetindihydrochalkon (I) noch ein Salz des Deoxyhesperetindihydrochalkons (I) sind bzw. enthalten, und
(2) Mischen der Komponenten (a) sowie (b) und/oder (c) und/oder (d) mit den weiteren Komponenten.

Die erfindungsgemäßen Zubereitungen umfassend Deoxyhesperetindihydrochalkon (I) und/oder dessen Salze, werden vorzugsweise hergestellt, indem Deoxyhesperetindihydrochalkon (I) und/oder das bzw. die Salze des Deoxyhesperetindihydrochalkons (I) mit einem festen oder flüssigen Trägerstoff in Form einer Lösung oder eines Gemisches in eine entsprechende Zubereitung, d.h. insbesondere eine der Ernährung, der Nahrungsergänzung, der Mundpflege oder dem Genuss dienende oder eine kosmetische oder eine zur oralen Anwendung bestimmte pharmazeutische (Basis-)Zubereitung eingearbeitet wird bzw. werden. Als Lösung vorliegende erfindungsgemäße Zubereitungen können vorteilhafterweise auch durch Sprühtrocknung in eine feste Zubereitung überführt werden.

Gemäß einer weiteren bevorzugten Ausführungsform werden zur Herstellung erfindungsgemäßer Zubereitungen die erfindungsgemäß Deoxyhesperetindihydrochalkon (I) und/oder dessen Salze sowie ggf. weitere Bestandteile der erfindungsgemäßen Zubereitung vorher (d.h. vor Einarbeitung in die Zubereitung) in Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten, Cellulose oder Cellulosederivaten (z.B. Hydroxypropylcellulose), anderen Polysacchariden (z.B. Alginat), natürlichen Fetten, natürlichen Wachsen (z.B. Bienenwachs, Carnaubawachs) oder aus Proteinen, z.B. Gelatine, eingearbeitet.

In einem weiteren bevorzugten Herstellungsverfahren werden Deoxyhesperetindihydrochalkon (I) und/oder dessen Salze vorher mit einem oder mehreren geeigneten Komplexbildnern, beispielsweise mit Cyclodextrinen oder Cyclodextrinderivaten, bevorzugt α- oder β-Cyclodextrin, komplexiert und in dieser komplexierten Form eingesetzt.

Besonders bevorzugt ist eine erfindungsgemäße Zubereitung, bei der die Matrix so gewählt wird, dass Deoxyhesperetindihydrochalkon (I) und/oder das bzw. die Salze des Deoxyhesperetindihydrochalkons (I) verzögert von der Matrix freigegeben werden, so dass man eine lang anhaltende Wirkung erhält.

Als weitere Bestandteile für erfindungsgemäße, der Ernährung oder dem Genuss dienende Zubereitungen können übliche Grund-, Hilfs- und Zusatzstoffe für Nahrungs- oder Genussmittel in einer erfindungsgemäßen Zubereitung enthalten sein (wie oben beschrieben) oder für die Herstellung solcher Zubereitungen verwendet werden, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse-oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose, Tagatose), Zuckeralkohole (z.B. Sorbit, Erythritol), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. γ-Aminobuttersäure, Taurin), Peptide (z.B. Glutahthion), native oder prozessierte Proteine (z.B. Gelatine), Enzyme (z.B. Peptidasen), Nukleinsäuren, Nucleotide, weitere Geschmackskorrigenzien bzw. Geschmacksmodulatoren für unangenehme Geschmackseindrücke oder nicht unangenehme Geschmackseindrücke, insbesondere geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole, Gummi arabicum), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), (gegebenenfalls weitere) Bitterstoffe (z.B. Chinin, Coffein, Limonin, Amarogentin, Humolone, Lupolone, Catechine, Tannine), (gegebenenfalls weitere) Süßstoffe (z.B. Saccharin, Cyclamat, Aspartam, Neotam), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, synthetische, natürliche oder naturidentische Aromastoffe oder Riechstoffe sowie Geruchskorrigentien.

Zahnpflegemittel (als Basis für erfindungsgemäße der Mundpflege dienende Zubereitungen) umfassen im allgemeinen ein abrasives System (Schleif- oder Poliermittel), wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemittel wie z.B. Glycerin und/oder Sorbit, Verdickungsmittel, wie z.B. Carboxymethylcellulose, Polyethylenglycole, Carrageenan und/oder Laponite^{®}, (ggf. zusätzliche) Süßstoffe, wie z.B. Saccharin, Geschmackskorrigenzien für unangenehme weitere Geschmackseindrücke oder in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffe wie z.B. Menthol, Mentholderivate (z.B. L-Menthol, L-Menthyllactat, L-Menthylalkylcarbonate, Menthonketale, Menthancarbonsäureamide), 2,2,2-Trialkylessigsäureamide (z.B. 2,2-DÜsopropylpropionsäuremethylamid), Icilin-Derivate, Stabilisatoren und aktive Wirkstoffe, wie z.B. Natriumfluorid, Natriummonofluorphosphat, Zinndifluorid, quartäre Ammoniumfluoride, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat oder Geruchskorrigenzien.

Kaugummis (als weiteres Beispiel für erfindungsgemäße der Mundpflege dienende Zubereitungen) umfassen im allgemeinen eine Kaugummibase, d.h. eine beim Kauen plastisch werdende Kaumasse, Zucker verschiedener Arten, Zuckeraustauschstoffe, Süßstoffe, Zuckeralkoholen, Geschmackskorrigenzien bzw. Geschmacksmodulatoren für unangenehme oder in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Feuchthaltemittel, Verdicker, Emulgatoren, Aromen und Stabilisatoren oder Geruchskorrigentien.

Als Bestandteile für erfindungsgemäße orale pharmazeutische Zubereitungen können sämtliche der üblicherweise eingesetzten Wirk-, Grund-, Hilfs- und Zusatzstoffe für zur oralen Anwendung vorgesehene pharmazeutische Zubereitungen verwendet werden. Als Wirkstoffe können insbesondere unangenehm schmeckende oral formulierbare pharmazeutische Wirkstoffe verwendet werden, insbesondere bitter schmeckende Stoffe, deren bitterer Geschmackseindruck erfindungsgemäß maskiert oder vermindert werden kann. Die Wirk-, Grund-, Hilfs- und Zusatzstoffe können in an sich bekannter Weise in die zur oralen Anwendung geeigneten Applikationsformen überführt werden. Dies geschieht regelmäßig unter Verwendung inerter, nichttoxischer, pharmazeutisch geeigneter Hilfsstoffe. Hierzu zählen u.a. Trägerstoffe (z.B. mikrokristalline Cellulose), Lösungsmittel (z.B. flüssige Polyethylenglycole), Emulgatoren (z.B. Natriumdodecylsulfat), Dispergiermittel (z.B. Polyvinylpyrrolidon), synthetische und natürliche Biopolymere (z.B. Albumin), Stabilisatoren (z.B. Antioxidantien wie Ascorbinsäure), Farbstoffe (z.B. anorganische Pigmente wie Eisenoxide) und Geruchskorrigenzien sowie Geschmackskorrigenzien, insbesondere solche, die nicht den bitteren Geschmack betreffen.

Bevorzugt können erfindungsgemäße Zubereitungen (wie oben beschrieben) zudem eine (nicht erfindungsgemäße) Aromakomposition enthalten, um den Geschmack und/oder Geruch der Zubereitung (weiter) abzurunden und zu verfeinern. Geeignete Aromakompositionen enthalten z.B. synthetische, natürliche oder naturidentische Aroma, Riech- und Geschmackstoffe sowie geeignete Hilfs- und Trägerstoffe. Als besonders vorteilhaft wird es dabei angesehen, dass ein bitterer oder metallischer Geschmackseindruck, der von in den erfindungsgemäßen Zubereitungen enthaltenen Aroma- bzw. Riech- oder Geschmackstoffen ausgeht, maskiert oder vermindert werden kann, so dass das gesamte Aroma- oder Geschmacksprofil verbessert wird.

Erfindungsgemäße Zubereitungen, die als Halbfertigwaren vorliegen, können zur Maskierung oder Verminderung eines unangenehmen Geschmackseindrucks von Fertigware-Zubereitungen dienen, die unter Verwendung der Halbfertigware-Zubereitung hergestellt werden.

In einer besonders bevorzugten Ausführung der vorliegenden Erfindung werden das erfindungsgemäß zu verwendenden Deoxyhesperetindihydrochalkon (I) bzw. dessen Salze in einer erfindungsgemäßen Aromakomposition bzw. einer erfindungsgemäßen Zubereitung enthaltend eine erfindungsgemäße Aromakomposition (wie oben beschrieben) in Kombination mit zumindest einer weiteren Substanz zum Verändern, Maskieren oder Vermindern eines unangenehmen Geschmackseindrucks und/oder zum Verstärken eines angenehmen Geschmackseindrucks verwendet, wobei der angenehme Geschmackseindruck vorzugsweise ein süßer und/oder Umami-Geschmack ist. Auf diese Weise kann ein besonders wirksamer Maskierungseffekt erreicht werden.

Weitere Substanzen zum Maskieren oder Vermindern eines unangenehmen Geschmackseindrucks und/oder zum Verstärken eines angenehmen Geschmackseindrucks bzw. Geschmackskorrigenzien sind ― ohne die vorliegende Erfindung darauf zu beschränken ― vorzugsweise ausgewählt aus der Gruppe bestehend aus Nucleotide n(z.B. Adenosin-5'-monophosphat, Cytidin-5'-monophosphat) oder deren pharmazeutisch akzeptable Salzen, Lactisolen, Natriumsalzen (z.B. Natriumchlorid, Natriumlactat, Natriumcitrat, Natriumacetat, Natriumgluconoat), Hydroxyflavanone, wie zum Beispiel Eriodictyol, Sterubin (Eriodictyol-7-methylether), Homoeriodictyol, und deren Natrium-, Kalium-, Calcium-, Magnesium- oder Zinksalzen (insbesondere solche wie beschrieben in EP 1 258 200, die bezüglich der darin offenbarten entsprechenden Verbindungen auf dem Wege der Verweisung Bestandteil dieser Anmeldung wird), Hydroxybenzoesäureamiden, wie zum Beispiel 2,4-Dihydroxybenzoesäurevanillylamid, 2,4-Dihydroxybenzoesäure-*N*-(4-hydroxy-3-methoxyben zyl)amid , 2 , 4 , 6-Trihydroxybenzoesäure-N-(4-hydroxy-3-methoxybenzyl)amid, 2-Hydroxy-benzoesäure-*N-*4-(hydroxy-3-m ethoxybenzyl)amid, 4-Hydroxybenzoesäure-*N*-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-*N*-2-(4-hydroxy-3-methoxyphenyl)ethylamid, 2 , 4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-*N*-[2-(4-hydroxy-3-m ethoxyphenyl)ethyl]amid; 4-Hydroxybenzoesäurevanillylamid (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, wie zum Beispiel 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl)ethanon) (insbesondere solche wie beschrieben in WO 2006/106023, die bezüglich der darin offenbarten entsprechenden Verbindungen auf dem Wege der Verweisung Bestandteil dieser Anmeldung wird); Hydroxyphenlaalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanilline (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemischen von Molke-proteinen mit Lecithinen, Hesperitin wie in der WO 2007/014879 offenbart, die hinsichtlich dieser Verbindungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Propenylphenylglycosiden (Chavicolglycosiden) wie in EP 1 955 601 A1 beschrieben, die hinsichtlich dieser Verbindungen auf dem Wege der Verweisung Bestandteil dieser Anmeldung wird, Pellitorin und abgeleitete Aromakompositionen wie in US Provisional Application 60/944,854 und den darauf basierenden Patentanmeldungen beschrieben, Umami-Verbindungen wie in WO 2008/046895 A1 und EP 1 989 944 A1 beschrieben, die jeweils hinsichtlich dieser Verbindungen auf dem Wege der Verweisung Bestandteil dieser Anmeldung werden sowie Umami-Verbindungen wie beschrieben in US Provisional Application 60/984,023 bzw. US Provisional Application 61/061,273 und den jeweils darauf basierenden Patentanmeldungen, die bezüglich der darin offenbarten entsprechenden Verbindungen auf dem Wege der Verweisung Bestandteil dieser Anmeldung werden.

Besonders bevorzugt sind Kombinationen mit Homoeriodictyol und dessen Natrium-, Kalium-, Calcium-, Magnesium- oder Zinksalzen, Divanillinen, Phloretin und/oder Hesperitin.

Ein weiterer Aspekt der vorliegenden Erfindung betrifft ein Verfahren zum Beeinflussen der Stärke eines Geschmackseindrucks von süß schmeckenden, unangenehm, insbesondere bitter, schmeckenden oder sowohl süß als auch unangenehm, insbesondere bitter, schmeckenden Stoffen, mit folgendem Schritt:
- Mischen der folgenden Komponenten
   (a)
      - Deoxyhesperetindihydrochalkon (I)
      oder
      - ein Salz des Deoxyhesperetindihydrochalkons (I) oder eine Mischung umfassend oder bestehend aus mehreren Salzen des Deoxyhesperetindihydrochalkons (I),
      oder
      - eine Mischung umfassend oder bestehend aus Deoxyhesperetindihydrochalkon (I) und
         einem Salz oder mehreren Salzen des Deoxyhesperetindihydrochalkons (I),
      sowie
   (b) einen oder mehrere weitere süß schmeckende Stoffe
      und/oder
   (c) einen oder mehrere unangenehm, insbesondere bitter, schmeckende Stoffe
      und/oder
   (d) einen oder mehrere sowohl süß als auch unangenehm, insbesondere bitter, schmeckende Stoffe;
      sowie ggf. weitere Komponenten
      wobei die Komponenten (b)-(d) sowie die weiteren Komponenten weder Deoxyhesperetindihydrochalkon (I) noch ein Salz des Deoxyhesperetindihydrochalkons (I) sind bzw. enthalten,
      wobei die Gesamtmenge an Komponente (a) in der Mischung ausreicht, um die Stärke des Geschmackseindrucks des oder der süß schmeckenden Stoffe (b), des oder der unangenehm, insbesondere bitter, schmeckenden Stoffe (c) bzw. des oder der sowohl süß als auch unangenehm, insbesondere bitter, schmeckenden Stoffe (d) zu beeinflussen.

Bevorzugt ist eine Variante des erfindungsgemäßen Verfahrens, wobei die Gesamtmenge an Komponente (a) in der Mischung ausreicht,
- den süßen Geschmackseindruck eines süß schmeckenden Stoffes oder Stoffgemisches (b) synergistisch zu verstärken,
   und/oder
- den unangenehmen Geschmackseindruck eines unangenehm schmeckenden Stoffes oder Stoffgemisches (c), insbesondere den bitteren Geschmackseindruck eines bitter schmeckenden Stoffes oder Stoffgemisches (c) zu vermindern oder zu maskieren
   und/oder
- den süßen Geschmackseindruck eines sowohl süß als auch unangenehm, insbesondere bitter schmeckenden Stoffes oder Stoffgemisches (d) synergistisch zu verstärken und den unangenehmen, insbesondere bitteren, Geschmackseindruck des sowohl süß als auch unangenehm, insbesondere bitter, schmeckenden Stoffes oder Stoffgemisches (d) zu vermindern oder zu maskieren.

Die letztere Variante des Verfahrens ist besonders bevorzugt.

Für weitere bevorzugte Ausgestaltungen eines erfindungsgemäßen Verfahrens, insbesondere hinsichtlich des Deoxyhesperetindihydrochalkons (I) und seiner Salze sowie der bevorzugten Auswahl der Stoffe (b), (c) bzw. (d) gilt das vorangehend Gesagte entsprechend.

Nachfolgend wird die Erfindung anhand von Beispielen weiter erläutert. Die Beispiele dienen zur Verdeutlichung der Erfindung, ohne den Schutzbereich der Patentansprüche dabei einzuschränken. Sofern nicht anders angegeben, beziehen sich sämtliche Angaben auf das Gewicht.

### Beispiele

### Beispiel 1: 1-(2,4-Dihydroxy-phenyl)-3-(3-hydroxy-4-methoxy-phenyl)-propan-1-on (Verbindung (I))

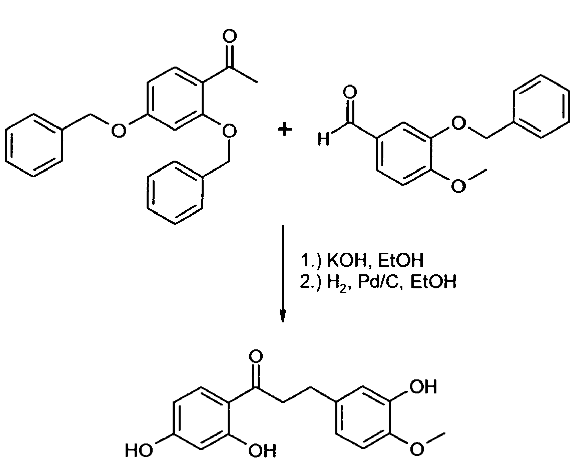

Eine Lösung aus 11.28 g (33.9 mmol) 1-(2,4-Bis-benzyloxy-phenyl)-ethanon (vgl. Chemical & Pharmaceutical Bulletin 1996, 44(5), 972-979) und 7.27 g (33.9 mmol) 3-Benzyloxy-4-methoxy-benzaldehyd *(*Tetrahedron 1992, 48(36), 7527-7538) in 170 ml Ethanol wird in einem Dreihalskolben mit Intensivkühler vorgelegt. Dann werden 2.54 g (6,8 mmol) einer 15%igen ethanolischen Kaliumhydroxidlösung innerhalb von 5 Minuten zugegeben und die Mischung für drei Stunden unter Rückfluss erhitzt. Nach Abkühlen der Reaktionsmischung auf 5°C wird der entstandene Feststoff abgesaugt, fünfmal mit je 100 ml Ethanol/Wasser (6:4) gewaschen und im Vakuumtrockenschrank bei 80°C getrocknet. Es werden 11.88 g eines farblosen Feststoffes erhalten. Anschließend werden 9.20 g (15.5 mmol) dieses Feststoffes in 200 ml Ethylacetat und 50 ml Isopropanol gelöst und mit 2.0 g Palladium (5% immobilisiert auf Aktivkohle) versetzt. Diese Mischung wird für 90 Minuten bei 60°C unter Normaldruck hydriert. Nach Abkühlen wird der Katalysator durch Filtrieren über Kieselgur abgetrennt. Nach Entfernen des Lösungsmittels wird aus Hexan/Essigester (15:6) umkristallisiert. Man erhält 3.21 g (11.1 mmol) des entsprechenden Produktes als farblosen Feststoff.

**¹H-NMR (400 MHz, CD₃OD):** 2,87 (m, 2H); 3,16 (m, 2H); 3,80 (s, 3H); 4,87 (bs, 3H); 6,25 (d, *J* = 2,4 Hz, 1H); 6,33 (dd, *J* = 2,4 Hz, *J* = 8,9 Hz, 1 H); 6,65 (dd, *J* = 2,2 Hz, *J* = 8,1 Hz, 1H); 6,71 (d, *J*= 2,1 Hz, 1H); 6,80 (d, *J*= 8,1 Hz, 1H); 7,68 (d, *J*= 8,9 Hz, 1H) ppm.

**¹³C-NMR (100 MHz, CD₃OD):** 31,1 (CH₂); 40,7 (CH₂); 56,5 (CH₃); 103,6 (CH); 109,1 (CH); 112,9 (CH); 114,4 (C); 116,5 (CH); 120,5 (CH); 133,7 (CH); 135,4 (C); 147,41 (C); 147,44 (C); 166,3 (C); 166,4 (C); 205,5 (C=O) ppm.

**Massenspektrum (EI):** m/z (%) = 289 (6); 288 (M*⁺, 35); 151 (12); 150 (15); 138 (8); 137 (100); 119 (8); 91 (7); 81 (10); 53 (6).

### Anwendungsbeispiel 1: Bitter-Reduzierung einer Bitterstofflösung

Um die Reduzierung (d.h. die Maskierung oder Verminderung) des Bitter-Eindrucks in einer Probe zu quantifizieren, wurde die Bitterkeit einer 500 ppm Coffein enthaltenden Lösung von einer Expertengruppe jeweils mit einer Probe verglichen, die 500 ppm Coffein und zusätzlich verschiedene Konzentrationen von Deoxyhesperetindihydrochalkon (I) enthielt (Einstufung: 1 [nicht bitter] bis 10 [extrem bitter]).

Für die Auswertung, d.h. die Berechnung der Reduktion (in %) des Bittereindrucks wurden jeweils die Durchschnittswerte der Einschätzungen der Expertengruppe für die Coffeinlösung und die zu vergleichende, Coffein und eine zu beurteilende Substanz enthaltende Probe verwendet. 2,4-Dihydroxybenzoesäure (2,4-DHB) wurde dabei als Vergleich (Referenz) gemäß US 5,643,941 verwendet.

| **(Test-/Vergleichs-)Substanz** | **Coffein** (Bitter-stoff) | **Bitter-Eindruck** (1-10) | | **Reduktion des Bitter-Eindrucks** |
|---|---|---|---|---|
| | | **Coffein-Lösung** | **Probe** (Coffein + Substanz) | |
| 100 ppm 2,4-DHB | 500 ppm | 5.1 ± 1.0 | 5.0 ± 1.0 | 3 % |
| 10 ppm Deoxyhesperetindihydrochalkon (I) | 500 ppm | 4.9 ± 1.5 | 4.8 ± 1.6 | 2% |
| 25 ppm Deoxyhesperetindihydrochalkon (I) | 500 ppm | 5.2 ± 1.6 | 3.8 ± 1.5 | 26 % (p < 0.07) |
| 50 ppm Deoxyhesperetindihydrochalkon (I) | 500 ppm | 4.1 ± 2.1 | 3.7 ± 1.6 | 11 % |
| 100 ppm Deoxyhesperetindihydrochalkon (I) | 500 ppm | 5.1 ± 1.8 | 4.9 ± 1.9 | 3% |

### Anwendungsbeispiel 2: Bitter-Reduzierung verschiedener Bitterstofflösungen

Um die Reduzierung (d.h. die Maskierung oder Verminderung) des Bitter-Eindrucks in einer Probe zu quantifizieren, wurde die Bitterkeit einer Lösung enthaltend entweder 100 ppm Naringin oder 250 ppm Salicin oder 500 ppm Epigallocatechingallat und 75 ppm Ascorbinsäure von einer Expertengruppe jeweils mit einer Probe verglichen, die entweder 100 ppm Naringin oder 250 ppm Salicin oder 500 ppm Epigallocatechingallat und 75 ppm Ascorbinsäure und zusätzlich 50 ppm von Deoxyhesperetindihydrochalkon (I) enthielt (Einstufung: 1 [nicht bitter] bis 10 [extrem bitter]).

Für die Auswertung, d.h. die Berechnung der Reduktion (in %) des Bittereindrucks wurden jeweils die Durchschnittswerte der Einschätzungen der Expertengruppe für die jeweilige Bitterstofflösung und die Bitterstofflösung zusätzlich enthaltend 50 ppm Deoxyhesperetindihydrochalkon (I) verwendet.

| **Bitterstoff** | **Bitter-Eindruck** (1-10) | | **Reduktion des Bitter-Eindrucks** |
|---|---|---|---|
| | **Bitterstoff** | **Bitterstoff + (I)** | |
| 100 ppm Naringin | 6.9 ± 2.4 | 6.4 ± 2.4 | 7 % |
| 250ppm Salicin | 7.6 ± 1.6 | 6.5 ± 2.2 | 15 % |
| 500 ppm Epigallocatechingallat + 75 ppm Ascorbinsäure | 6.8 ± 2.6 | 6.1 ± 2.9 | 10 % |

### Anwendungsbeispiel 3: Verstärkung des Süß-Eindrucks einer Zuckerlösung

### Vergleichsversuch 1:

Um die Verstärkung des Süß-Eindrucks zu quantifizieren, wurde jeweils die Süße einer 5%igen Sucroselösung mit einer Probe, die 5 % Sucrose sowie 10 ppm, 25 ppm, 50 ppm bzw. 75 ppm des erfindungsgemäß zu verwendenden Deoxyhesperetindihydrochalkon (I) enthielt, von einer Expertengruppe verglichen (Einstufung: 1 [nicht süß] bis 10 [extrem süß]).

Für die Auswertung, d.h. die Berechnung der Verstärkung (in %) des Süß-Eindrucks wurden jeweils die Durchschnittswerte der Einschätzungen der Expertengruppe für die Sucroselösung und die zu vergleichende, Sucrose und Deoxyhesperetindihydrochalkon (1) enthaltende Probe verwendet.

| **(Test-/Vergleichs-) Substanz** | **Sucrose** (Süßstoff) | **Süß-Eindruck (1-10)** | | **Verstärkung des Süß-Eindrucks** |
|---|---|---|---|---|
| | | **Sucrose-Lösung** | **Probe** (Sucrose +(I)) | |
| 10 ppm Deoxyhesperetindihydrochalkon (I) | 5 % | 5.3 ± 1.5 | 6.4 ± 1.6 | 21 % (p < 0.05) |
| 25 ppm Deoxyhesperetindihydrochalkon (I) | 5 % | 4.9 ± 1.5 | 6.9 ± 1.9 | 42 % (p< 0.003) |
| 50 ppm Deoxyhesperetindihydrochalkon (I) | 5 % | 5.5 ± 1.0 | 8.2 ± 0.9 | 48 % (p< 2.10⁻⁸) |
| 75 ppm Deoxyhesperetindihydrochalkon (I) | 5% | 5.9 ± 1.8 | 7.1 ± 1.7 | 21 % (p< 0.08) |

### Vergleichsversuch 2:

Zur Beurteilung der synergistisch süß verstärkenden Wirkung von Deoxyhesperetindihydrochalkon (I) wurde folgender Vergleichsversuch durchgeführt:

Die Eigensüße von Deoxyhesperetindihydrochalkon (I), die in verschiedenen Konzentrationen in reiner Form in Wasser aufgelöst wurde (0,0025 bzw. 0,0050 Gew.-% in Wasser), wurde anhand einer Vergleichsreihe verschiedener Sucrosekonzentrationen in Wasser (0; 0.25; 0.5; 0.75; 1.0; 1.5; 2.0; 3.0; 4.0 und 5.0 Gew.-% Sucrose in Wasser) von einer Expertengruppe (Panelisten) bestimmt.

Die Panelisten waren aufgefordert, jede Lösung der Verbindung (I) in Wasser gegen die Sucrose-Reihe zu testen und entsprechend ihrem Süßegrad einzuordnen (Sucroseäquivalenz). Aus den über die Panelisten gemittelten Ergebnissen konnte die Eigensüße des Deoxyhesperetindihydrochalkon (I) für die oben erwähnten Konzentrationen bestimmt werden. Neben der Sucroseäquivalenz der Lösungen der Verbindung (I) in Wasser (d.h. ohne Sucrose) wurde zudem die Sucroseäquivalenz in einer 5 %igen Sucrose-Lösung mit einer entsprechenden Menge der Verbindung (I) bestimmt.

| Konzentration von Deoxyhesperetindihydrochalkon (I) in Wasser [Gew_{.}-%] | Bestimmung der Sucroseäquivalenz in Wasser (ohne Sucrose) | Sucroseäquivalenz in einer 5%igen Sucrose-Lösung mit (I) | |
|---|---|---|---|
| | | Berechnung (5+x) % | Bestimmung |
| 0,0010 | 0.13% | 5.13 % | 6.4% |
| 0,0025 | 0.33 % | 5.33 % | 6.9 % |
| 0,0050 | 0.58 % | 5.58 % | 8.2 % |
| 0,0075 | 0.58 % | 5.58 % | 7.1 % |
| 0,0100 | 0.79 % | 5.79 % | - |

In allen untersuchten Fällen konnte eine synergistische Süßverstärkung bei dem Zusatz einer an sich nicht süßen Konzentration von Deoxyhesperetindihydrochalkon (I) festgestellt werden. So war rechnerisch zu erwarten, dass eine 5%ige Sucroselösung (d.h. eine Sucroselösung, die sensorisch definitionsgemäß 5 % Sucroseäquivalenten entspricht), die 10ppm, 25 ppm, 50 ppm bzw. 75 ppm an Deoxyhesperetindihydrochalkon (I) enthält, durch einen rein additiven Effekt der Eigensüße von Deoxyhesperetindihydrochalkon (I) (siehe die bestimmte Sucroseäquivalenz in Wasser) eine Süße von ca. 5.13%, 5.33%, 5.58% und nochmals 5.58% Sucroseäquivalenten ergibt. Die sensorische Bewertung einer solchen 5%igen Sucroselösung mit 10ppm, 25 ppm, 50 ppm bzw. 75 ppm an Deoxyhesperetindihydrochalkon (I) durch die Panelisten ergab jedoch gemittelt eine Sucroseäquivalenz von 6.4%, 6,9%, 8.2% bzw. 7.1 %. Dies entspricht in Anbetracht der rein rechnerisch zu erwartenden Werte einem Synergismus bzw. einem synergistischen Zusatzeffekt von ca. 25%, 29%, 47% bzw. 27%. Auffällig ist, dass bei der höchsten getesteten Konzentration von 75 ppm weder - wie zu erwarten wäre ―die höchste absolute noch die höchste synergistische Verstärkung gemessen wurde.

### Anwendungsbeispiel 4: Vergleich der Verstärkung des Süß-Eindrucks einer Zuckerlösung verschiedener Deoxydihydrochalkone

Um die Verstärkung des Süß-Eindrucks zu quantifizieren, wurde jeweils die Süße einer 5%igen Sucroselösung mit einer Probe, die 5 % Sucrose sowie 30 ppm bzw. 50 ppm eines Deoxydihydrochalcons enthielt, von einer Expertengruppe verglichen (Einstufung: 1 [nicht süß] bis 10 [extrem süß]).

Für die Auswertung, d.h. die Berechnung der Verstärkung (in %) des Süß-Eindrucks wurden jeweils die Durchschnittswerte der Einschätzungen der Expertengruppe für die Sucroselösung und die zu vergleichende, Sucrose und Deoxydihydrochalcon enthaltende Probe verwendet.

| **(Test-/Vergleichs-)** **Substanz** | **Sucrose** (Süßstoff) | **Süß-Eindruck (1-10)** | | **Verstärkung des Süß-Eindrucks** |
|---|---|---|---|---|
| | | **Sucrose-Lösung** | **Probe** (Sucrose + Substanz) | |
| 50 ppm Deoxyhesperetindihydrochalkon (I) | 5% | 5.5 ± 1.0 | 8.2 ± 0.9 | 48 % (p<2·10⁻⁸) |
| 30 ppm Davidigenin (1) | 5% | 5.6 ± 1.5 | 5.7 ± 1.4 | 2 % (p< 0.8) |
| 50 ppm 2',4,4'-Trihydroxy-3-methoxydihydrochalkon (2) | 5% | 5.2 ± 1.2 | 5.6 ± 1.4 | 8 % (p<0.35) |
| 50 ppm 6-Methyl-Davidigenin (3) | 5% | 5.4 ± 1.6 | 6.1 ± 1.8 | 12 % (p<0.31) |

### Anwendungsbeispiel 5: Sprühgetrocknete Zubereitung als Halbfertigware zur Aromatisierung von Fertigwaren

| **Inhaltsstoff** | **Einsatz in Gew.-%** | | | | |
|---|---|---|---|---|---|
| **Zubereitung** | **A** | **B** | **C** | **D** | **E** |
| Trinkwasser | 60.8 | 60.8 | 60.8 | 60.8 | 60.8 |
| Maltodextrin aus Weizen | 24.3 | 24.3 | 24.3 | 24.3 | 24.3 |
| Gummi Arabicum | 6.1 | 6.1 | 6.1 | 6.1 | 6.1 |
| Deoxyhesperetindihydrochalkon (I) | 8.8 | 6.6 | 5.5 | 3.3 | 4.4 |
| Hesperetin | - | 2.2 | - | - | 1.1 |
| Homoeriodictyol-Natriumsalz | - | - | - | 5.5 | 3.3 |
| Phloretin | - | - | 3.3 | - | - |

Das Trinkwasser wird in einem Behälter vorgelegt und Maltodextrin und Gummi Arabicum werden darin gelöst. Anschließend werden die Aromastoffe mit einem Turrax in die Trägerstofflösung emulgiert. Die Temperatur der Sprühlösung sollte 30°C nicht überschreiten. Das Gemisch wird dann sprühgetrocknet (Solltemperatur Eingang: 185 bis 195 °C, Solltemperatur Ausgang: 70 bis 75 °C).

### Anwendungsbeispiel 6: Kombination mit Süßungsmitteln

90 g Sucrose und 10 g Tagatose werden mit 0.5 g einer sprühgetrockneten Halbfertigware aus Anwendungsbeispiel 5 (gemäß Zubereitung A) versetzt und vermischt. Das Produkt kann z.B. als Süßungsmittel mit Bitter-Maskierungseffekt für Kaffee oder Tee eingesetzt werden.

### Anwendungsbeispiel 7: Zuckerreduziertes Ertrischunqsqetränk

- Zubereitung A:: Vergleichszubereitung mit 10 % Zucker
- Zubereitung B:: Vergleichszubereitung mit 8 % Zucker
- Zubereitung C:: Vergleichszubereitung mit 7 % Zucker
- Zubereitung D-G:: erfindungsgemäße gegenüber A (sowie für Zubereitungen E-G gegenüber B) zuckerreduzierte Zubereitungen mit 7 bzw. 8 % Zucker

| **Inhaltsstoff** | **Einsatz in Gew.-%** | | | | | | |
|---|---|---|---|---|---|---|---|
| **Zubereitung** | **A** | **B** | **C** | **D** | **E** | **F** | **G** |
| Zucker | 10 | 8 | 7 | 8 | 7 | 7 | 7 |
| Zitronensäure | 0.15 | 0.15 | 0.15 | 0.15 | 0.15 | 0.15 | 0.15 |
| Zitronenaroma | 0.1 | 0.1 | 0.1 | 0.1 | 0.1 | 0.1 | 0.1 |
| Deoxyhesperetindihydrochalkon (I) | - | - | - | 0.005 | 0.005 | 0.005 | 0.005 |
| Phloretin | - | - | - | - | - | 0.002 | - |
| Hesperetin | - | - | - | - | - | - | 0.001 |
| Wasser | ad 100 | | | | | | |

Die Zutaten wurden in der angegebenen Reihenfolge gemischt und mit Wasser auf 100 Gew.-% aufgefüllt. Die Mischungen werden in Glasflaschen gefüllt und carbonisiert.

Die Zubereitungen wurden anschließend sensorisch in verblindeten Duo-Tests geprüft und untereinander verglichen. Dabei wurde die Süße anhand einer Einstufung von 1 [nicht süß] bis 10 [extrem süß] von Experten eingeschätzt.

| **Vergleich (1. und 2. Probe)** | **Süß-Eindruck (1-10)** | | **Unterschied ( Süß-Eindruck)** | **Signifikanz p** |
|---|---|---|---|---|
| | **1. Probe** | **2. Probe** | | |
| **Zubereitungen A und B** | 7.1 ± 1.4 | 4.6 ± 1.3 | -35 % | < 0.001 |
| **Zubereitungen A und D** | 7.0 ± 1.4 | 5.6 ± 1.7 | -20 % | < 0.03 |
| **Zubereitungen A und C** | 7.1 ± 1.8 | 4.5 ± 1.4 | -37 % | < 0.001 |
| **Zubereitungen A und E** | 6.9 ± 1.5 | 5.3 ± 1.5 | -23 % | < 0.004 |
| **Zubereitungen A und F** | 6.9 ± 1.5 | 6.0 ± 1.6 | -12 % | < 0.1 |
| **Zubereitungen A und G** | 6.7 ±1.0 | 5.4 ± 1.6 | -20 % | < 0.005 |

Demnach wurde durch Reduzieren der Zucker-Menge (um 2 bzw. 3 Gew.-% bei Zubereitung B bzw. C, bezogen auf das Gesamtgewicht der Zubereitung) eine Abnahme der Süße von ca. 35 bzw. 37 % (s. Tabelle) beobachtet.

Durch Hinzufügen einer geringen Menge des erfindungsgemäß zu verwendenden Deoxyhesperetindihydrochalkon (I) allein (s. Zubereitungen D und E) oder in Kombination mit bekannten Aromastoffen zur Süßverstärkung (s. Zubereitungen F und G) konnte aufgrund der synergistisch süß-verstärkenden Wirkung von Deoxyhesperetindihydrochalkon (I) der Unterschied zwischen der Vollzucker-Zubereitung und der an Zucker ärmeren deutlich verringert werden.

### Anwendungsbeispiel 8: Tee-Zubereitung

| **Inhaltsstoff** | **Einsatz in Gew.-%** | | |
|---|---|---|---|
| **Zubereitung** | **A** | **B** | **C** |
| schwarzer Tee, Ceylon, Blattware | 94.0 | | |
| grüner Tee, China, Blattware | | 92.0 | |
| Mate Tee, Peru, Blattware | | | 95.0 |
| Halbfertigware A aus Anwendungsbeispiel 5 | 6.0 | | |
| Halbfertigware D aus Anwendungsbeispiel 5 | | 8.0 | |
| Halbfertigware E aus Anwendungsbeispiel 5 | | | 5.0 |

Der Tee und die Halbfertigware werden gemischt und in Teebeutel aus Filterpapier abgepackt. Zur Anwendung wird ein Teebeutel in 100 - 250 ml kochendes Wasser aufgegossen und 2 - 5 Minuten ziehen gelassen.

### Anwendungsbeispiel 9: Verwendung in einem soja-Getränk

| **Inhaltsstoff** | **Einsatz in Gew.-%** | | | |
|---|---|---|---|---|
| **Zubereitung** | **A** | **B** | **C** | **D** |
| Sojamilch (lokaler Supermarkt, nicht aromatisiert, unge- | 96.7 | 99.68 | 98.29 | 97.60 |
| Vanillearoma | 0.1 | 0.1 | | 0.05 |
| Milcharoma | | | 0.1 | 0.05 |
| Saccharose | 3.0 | | 1.5 | 2.0 |
| Rebaudiosid A 95 % | | 0.02 | 0.01 | |
| Emulgum | 0.1 | 0.1 | | 0.1 |
| 10 % Deoxyhesperetindihydrochalkon (I) in Ethanol | 0.1 | 0.1 | 0.1 | 0.1 |
| Hesperetin, 5 % in Ethanol | | | | 0.1 |

Deoxyhesperetindihydrochalkon (I) wurde in Ethanol vorgelöst und zu einer Sojamilch aus einem lokalen Supermarkt hinzugefügt. Die Mischung wurde zusammen mit einem Milcharoma im Becherglas verrührt.

### Anwendungsbeispiel 10: Verwendung in einem Kaugummi

| **Teil** | **Inhaltsstoff** | **Einsatz in Gew.-%** |
|---|---|---|
| A | Kaugummibase, Company "Jagum T" | 30.0 |
| B | Sorbit, pulverisiert | 39.0 |
| | Isomalt^{®} (Palatinit GmbH) | 9.5 |
| | Xylit | 2.0 |
| | Mannit | 3.0 |
| | Rebaudiosid A 98 % | 0.2 |
| | | |
| | Emulgum^{®} (Colloides Naturels, Inc.) | 0.3 |
| C | Sorbitol, 70% | 14.0 |
| | Glycerin | 1.0 |
| D | Aroma, enthaltend 1 Gew.-% Deoxyhesperetindihydrochalkon (I) bezogen auf das Gesamtgewicht des Aromas | 1.0 |

Teile A bis D werden gemischt und intensiv geknetet. Die Rohmasse kann z.B. in Form von dünnen Streifen zu verzehrfertigen Kaugummis verarbeitet werden.

### Anwendungsbeispiel 11: Verwendung in einer Zahnpasta

| **Teil** | **Inhaltsstoff** | **Einsatz in Gew.-%** |
|---|---|---|
| A | demineralisiertes Wasser | 22.00 |
| | Sorbitol (70%) | 45.00 |
| | Solbrol^{®} M, Natriumsalz (Bayer AG, p-Hydroxybenzoesäurealkylester) | 0.15 |
| | Trinatriumphosphat | 0.10 |
| | Rebaudiosid A, 98 % | 0.10 |
| | Natriummonofluorphosphat | 1.12 |
| | Polyethylenglycol 1500 | 5.00 |
| B | Sident 9 (abrasives Siliciumdioxid) | 10.00 |
| | Sident 22 S (verdickendes Siliciumdioxid) | 8.00 |
| | Natriumcarboxymethylcellulose | 0.90 |
| | Titandioxid | 0.50 |
| C | demineralisertes Wasser | 4.63 |
| | Natriumlaurylsulfat | 1.50 |
| D | Aroma, enthaltend 1 Gew.-% Deoxyhesperetindihydrochalkon (I), bezogen auf das Gesamtgewicht des Aromas | 1.00 |

Die Inhaltsstoffe der Teile A und B werden jeweils für sich vorgemischt und zusammen unter Vakuum bei 25 ― 30°C 30 min gut verrührt. Teil C wird vorgemischt und zu A und B gegeben; D wird hinzugefügt und die Mischung unter Vakuum bei 25 ― 30°C 30 min gut verrührt. Nach Entspannung ist die Zahnpasta fertig und kann abgefüllt werden.

### Anwendungsbeispiel 12: Zuckerfreie Hartkaramelle

| **Inhaltsstoff** | **Gehalt (%)** | | | |
|---|---|---|---|---|
| | **A** | **B** | **C** | **D** |
| Palatinit, Typ M | 75.00 | 74.00 | 75.50 | 75.00 |
| Zitronensäure | - | 1.00 | 0.50 | - |
| Farbstoff gelb | - | 0.01 | - | - |
| Farbstoff rot | - | - | 0.01 | - |
| Farbstoff blau | 0.01 | - | - | 0.01 |
| Pfefferminzaroma | 0.1 | - | - | 0.1 |
| Zitronenaroma | - | 0.1 | - | - |
| Rotfruchtaroma | - | - | 0.1 | - |
| Rebaudiosid A 98 % | - | 0.040 | - | 0.040 |
| Deoxyhesperetindihydrochalkon (I) | 0.010 | 0.005 | 0.010 | 0.005 |
| Hesperetin | - | 0.001 | - | 0.001 |
| Phloretin | - | 0.002 | - | - |
| Wasser | ad 100 | | | |

Palatinit wurde mit Wasser gemischt und die Mischung bei 165 °C aufgeschmolzen und anschließend auf 115°C abgekühlt. Die übrigen Bestandteile wurden zugegeben und nach dem Durchmischen in Formen gegossen, nach dem Erstarren aus den Formen entfernt und anschließend einzeln verpackt.

### Anwendungsbeispiel 13: Zuckerreduzierter Kochpudding

- A:: Vergleichszubereitung mit 7,8 % Sucrosegehalt
- B:: Vergleichszubereitung mit (gegenüber A) reduziertem Sucrosegehalt
- C:: Erfindungsgemäße Zubereitung mit (gegenüber A) reduziertem Sucrosegehalt und Deoxyhesperetindihydrochalkon (I)
- D:: Erfindungsgemäße Zubereitung mit (gegenüber A) reduziertem Sucrosegehalt, D-Tagatose und Deoxyhesperetindihydrochalkon (I)

| | **Zubereitung (Angaben in Gew.-%)** | | | |
|---|---|---|---|---|
| **Inhaltsstoff** | **A** | **B** | **C** | **D** |
| Sucrose | 7.8 | 5.4 | 5.4 | 5.4 |
| Stärke | 3.0 | 3.0 | 3.0 | 3.0 |
| Magermilch-pulver | 1.5 | 1.5 | 1.5 | 1.5 |
| Aubygel MR50 | 0.5 | 0.5 | 0.5 | 0.5 |
| Vanilleschoten-Extrakt, sprühgetrocknet, Symrise | 0.1 | 0.1 | 0.1 | 0.1 |
| Deoxyhesperetindihydrochalkon (I) | - | - | 0.01 | 0.005 |
| D-Tagatose | - | - | - | 0.1 |
| Milch 1,5 % Fettanteil | ad 100 | | | |

Die festen Stoffe wurden vorgelegt und mit der Milch aufgerührt. Die Mischung wurde auf 95 °C für 2 min unter gutem Rühren aufgewärmt, abgefüllt und auf 5 ― 8 °C abgekühlt.

Bei Zubereitung C konnte bei Verkostung durch Versuchspersonen die Süße der 7,8 % Sucrose enthaltenden Vergleichszubereitung A (bei einem etwas verzögerten Süßeeindruck) erreicht werden. Zubereitung C war im Vergleich zur Vergleichszubereitung B wesentlich stärker süß. Zubereitung D war vergleichbar mit C, zeigte aber eine verbesserte Anfangssüße.

### Anwendungsbeispiel 14: Fettarme Joghurts

- A:: Vergleichszubereitung mit 10 % Sucrose
- B, C:: Erfindungsgemäße Zubereitungen mit Süßstoffmischung und Deoxyhesperetindihydrochalkon (I)

| | **Zubereitung (Angaben als Gew.-%)** | | |
|---|---|---|---|
| **Inhaltsstoff** | **A** | **B** | **C** |
| Sucrose | 10.0 | 8.0 | 6.0 |
| Tagatose | - | - | 0.5 |
| Fructose | - | - | 0.5 |
| Deoxyhesperetindihydrochalkon (I) | - | 0.05 | 0.025 |
| Hesperetin | - | - | 0.005 |
| Joghurt, 0,1 % Fett | ad 100 | | |

Die Inhaltsstoffe wurden gemischt und bei 5°C gekühlt.

### Anwendungsbeispiel 15: Verwendung zusammen mit Süßstoffen in fettarmen Joghurts

- A:: Vergleichszubereitung mit Süßstoffmischung
- B-D:: Erfindungsgemäße Zubereitungen mit Süßstoffmischung und Deoxyhesperetindihydrochalkon (I)

| | **Zubereitung (Angaben in Gew.-%)** | | | |
|---|---|---|---|---|
| **Inhaltsstoff** | **A** | **B** | **C** | **D** |
| D-Tagatose | 0.482 | 0.482 | 0.482 | - |
| Sucralose | 0.003 | 0.003 | 0.003 | - |
| Aspartam | 0.005 | 0.005 | 0.005 | - |
| Acesulfam K | 0.01 | 0.01 | 0.01 | - |
| Rebaudiosid A 98% | - | - | - | 0.050 |
| Deoxyhesperetindihydrochalkon (I) | - | 0.05 | 0.025 | 0.025 |
| Hesperetin | - | - | 0.015 | 0.015 |
| Phloretin | - | - | 0.005 | 0.005 |
| Joghurt, 0,1 % Fett | ad 100 | | | |

Die Inhaltsstoffe wurden gemischt und bei 5°C gekühlt.

Anwendungsbeispiel 16: Milchmischgetränke
- A, B:: Vergleichszubereitungen mit Zucker
- C, D:: Erfindungsgemäße Zubereitungen mit Zucker und Deoxyhesperetindihydrochalkon (I)

| | **Zubereitung (Angaben in Gew.-%)** | | | |
|---|---|---|---|---|
| **Inhaltsstoff** | **A** | **B** | **C** | **D** |
| Sucrose | 10.0 | 8.0 | 8.0 | 7.0 |
| Fructose | - | - | - | 0.5 |
| Deoxyhesperetindihydrochalkon (I) | - | - | 0.05 | 0.025 |
| Hesperetin | - | - | - | 0.025 |
| Phloretin | - | - | - | 0.005 |
| H-Milch, 1,5 % Fett | ad 100 | | | |

Die Inhaltsstoffe wurden gemischt, mit Milch aufgefüllt, gut gerührt, in Flaschen abgefüllt und bei 5°C gekühlt gelagert.

### Anwendungsbeispiel 17: Zuckerreduziertes Tomatenketchup

- A:: Vergleichszubereitung mit Zucker
- B:: Vergleichszubereitung mit (gegenüber A) reduziertem Zuckeranteil
- C-H:: Erfindungsgemäße Zubereitungen mit (gegenüber A) reduziertem Zuckeranteil und Deoxyhesperetindihydrochalkon (I)

| | **Zubereitung (Angaben in Gew.-%)** | | | | | | | |
|---|---|---|---|---|---|---|---|---|
| **Inhaltsstoff** | **A** | **B** | **C** | **D** | **E** | **F** | **G** | **H** |
| Kochsalz | 2.0 | 2.0 | 2.0 | 2.0 | 2.0 | 2.0 | 2.0 | 2.0 |
| Stärke, Farinex WM 55 | 1.0 | 1.0 | 1.0 | 1.0 | 1.0 | 1.0 | 1.0 | 1.0 |
| Sucrose | 12.0 | 9.6 | 9.2 | 8.4 | 9.6 | 9.6 | 8.4 | 8.4 |
| Tomaten-Konzentrat 2-fach | 40.0 | 40.0 | 40.0 | 40.0 | 30.0 | 30.0 | 30.0 | 30.0 |
| Glucosesirup 80 Brix | 18.0 | 18.0 | 18.0 | 18.0 | 18.0 | 18.0 | 18.0 | 18.0 |
| Branntweinessig 10% | 7.0 | 7.0 | 7.0 | 7.0 | 3.0 | 3.0 | 3.0 | 3.0 |
| Deoxyhesperetindihydrochalkon (I) 2,5%ig in 1,2-Propylenglycol | | | 0.2 | 0.1 | 0.1 | 0.2 | 0.1 | 0.1 |
| Hesperetin 2,5%ig in 1,2-Propylenglycol | | | | | 0.1 | | 0.2 | |
| Phloretin 2,5% in 1,2-Propylenglycol | | | | 0.2 | 0.2 | | | 0.2 |
| Wasser | ad 100 | | | | | | | |

Die Inhaltsstoffe werden in der angegebenen Reihenfolge gemischt und das fertige Ketchup mit Hilfe eines Rührwerkes homogenisiert, in Flaschen abgefüllt und sterilisiert.

### Anwendungsbeispiel 18: Zuckerreduzierte Eiscremes

- A:: Vergleichszubereitung mit Zucker
- B:: Vergleichszubereitung mit (gegenüber A) reduziertem Zuckeranteil
- C-F:: Erfindungsgemäße Zubereitungen mit (gegenüber A) reduziertem Zuckeranteil und Deoxyhesperetindihydrochalkon (I)

| | **Zubereitung (Gehalt in Gew.-%)** | | | | | |
|---|---|---|---|---|---|---|
| **Inhaltsstoff** | **A** | **B** | **C** | **D** | **E** | **F** |
| Pflanzenfett, Schmelzbereich 35 - 40 °C | 20.00 | 20.00 | 20.00 | 20.00 | 20.00 | 20.00 |
| Zucker (Saccharose) | 12.00 | 8.00 | 8.00 | 8.00 | 8.00 | 8.00 |
| Magermilchpulver | 5.00 | 5.00 | 5.00 | 5.00 | 5.00 | 5.00 |
| Glucosesirup 72 % Trockensubstanz | 5.00 | 5.00 | 5.00 | 5.00 | 5.00 | 5.00 |
| Emulgator SE 30 (Grindstedt Products, Dänemark) | 0.65 | 0.65 | 0.65 | 0.65 | 0.65 | 0.65 |
| Aroma, enthaltend 0,1 % Diacetyl und 1 % Vanillin | 0.20 | 0.20 | 0.20 | 0.20 | 0.20 | 0.20 |
| Deoxyhesperetindihydrochalkon (I) 2,5%ig in 1,2-Propylenglycol | | | 0.20 | 0.10 | 0.20 | 0.10 |
| Hesperetin 2,5%ig in 1,2-Propylenglycol | | | | 0.10 | | 0.10 |
| Phloretin 2,5% in 1,2-Propylenglycol | | | | | 0.05 | 0.05 |
| Magermilch | ad 100 | | | | | |

Das Pflanzenfett wurde auf 58°C erwärmt. Magermilch und Glucosesirup wurden auf 55° erhitzt und Zucker, Magermilchpulver sowie Emulgator und Aroma hinzugefügt und die Mischung ins Pflanzenfett gegeben. Die Mischung wurde mit Hilfe eines Durchflusshochdruckhomogenisators homogenisieret (180 / 50 bar). Die erhaltene Masse wurde 1 min lang bei 78°C temperiert, anschließend auf 2 - 4 °C abgekühlt und 10 h zur Reifung bei dieser Temperatur inkubiert. Danach wurde die gereifte Masse abgefüllt und bei -18°C eingefroren gelagert.

### Anwendungsbeispiel 19: Für Diabetiker geeignetes Eis

Es wurde ein für Diabetiker geeignetes Eis aus folgenden Zutaten hergestellt und in Portionen zu je 95 mL in Becher abgefüllt:

Eingedickte entrahmte Milch, Fructosesirup, Erdbeerstücke und Erdbeerpüree (15%), Pflanzenfett, Diätschokoladensplitter (3,5%, mit Emulgator Sojalecithin), Molkenerzeugnis, Rote Bete Saft, Johannisbrotkernmehl, Guarkernmehl, Carrageen, Emulgator (E 471), Gelatine, Säuerungsmittel Citronensäure, Erdbeer-Aroma (enthaltend 1 Gew.-% Deoxyhesperetindihydrochalkon (I), bezogen auf das Gesamtgewicht des Erdbeer-Aromas), Farbstoff Carotin.

Nährwert (pro 95 mL):
Eiweiß 1,8 g, Kohlenhydrate 13,3 g (davon Fructose 9,5 g), Fett 4,2 g.

### Anwendungsbeispiel 20: Diätschokolade auf Basis von Maltit

Es wurde eine für Diabetiker geeignete Schokolade aus folgenden Zutaten hergestellt und in rechteckige Tafeln gegossen:
Maltit, Haselnussmasse, Kakaobutter, Magermilchpulver, Kakaomasse, Inulin, Butterreinfett, Emulgator Sojalecithine, Vanille-Aroma (enthaltend Vanilleschoten-Extrakt, Vanillin und 1 Gew.-% Deoxyhesperetindihydrochalkon (I), bezogen auf das Gesamtgewicht des Vanille-Aromas).

Nährwert (pro 100 g): Eiweiß 8 g, Kohlenhydrate 43 g (davon Maltit 34 g), Fett 34 g.

### Anwendungsbeispiel 21: Diätschokolade auf Basis von Fructose

Es wurde eine für Diabetiker geeignete Schokolade aus folgenden Zutaten hergestellt und in rechteckige Tafeln gegossen:
Kakaomasse, Fructose, Magermilchpulver, Kakaobutter, Inulin, Butterreinfett, Emulgator Sojalecithin, Walnüsse, Speisesalz, Vanille-Aroma (enthaltend Vanillin und 1 Gew.-% Deoxyhesperetindihydrochalkon (I), bezogen auf das Gesamtgewicht des Vanille-Aromas).

Nährwert (pro 100 g):
Eiweiss 8,8 g, Kohlenhydrate 34 g (davon Fructose 23 g, Lactose 7,5 g, Saccharose 1,4 g), Fett 36 g; Ballaststoffe 18,5 (davon 12,2 g Inulin); Natrium: 0,10 g. Kakao-Anteil mindestens 50 Gew.-%.

### Anwendungsbeispiel 22: Zuckerreduzierte Müslimischung

| **Nr.** | **Inhaltsstoff** | **A** (Gew.-%), | **B** (Gew.-%), |
|---|---|---|---|
| | | Vergleichszubereitung | erfindungsgemäß |
| 1 | Haferflocken | 17.0 | 18.9 |
| 2 | Knusprige Haferflocken Cluster | 10.0 | 12.0 |
| 3 | Reis Crispies | 16.9 | 17.8 |
| 4 | Cornflakes | 16.5 | 17.5 |
| 5 | Korinthen | 3.5 | 3.5 |
| 6 | Haselnüsse, zerhackt | 2.5 | 2.5 |
| 7 | Glucose Sirup aus Weizen, DE 30 | 9.5 | 9.5 |
| 8 | Saccharose | 20.0 | 14.0 |
| 9 | Wasser | 4.0 | 4.0 |
| 10 | Citronensäurepulver, wasserfrei | 0.1 | 0.1 |
| 11 | Aroma, enthaltend 2,5 Gew.-% an Deoxyhesperetindihydrochalkon (I), bezogen auf das Gesamtgewicht des Aromas | - | 0.2 |

Bestandteile Nr. 1 bis 6 werden jeweils in einer Drehtrommel gemischt (Mix 1). Bestandteile Nr. 7 bis 9 werden erwärmt und Bestandteil Nr. 10 (in Rezeptur B zudem Bestandteil Nr. 11) wird zugeben (Mix 2). Mix 2 wird zu Mix 1 gegeben und anschließend wird gut gemischt. Zuletzt wird die resultierende Müslimischung auf ein Backblech gegeben und in einem Ofen bei 130°C für 8 Minuten getrocknet.

### Anwendungsbeispiel 23: Zuckerreduzierte Fruchtgummis

| **Inhaltsstoff** | **A** (Gew.-%), | **B** (Gew.-%), |
|---|---|---|
| | Vergleichszubereitung | erfindungsgemäß |
| Wasser | 23.70 | 25.70 |
| Saccharose | 34.50 | 8.20 |
| Glucosesirup, DE 40 | 31.89 | 30.09 |
| Iso Syrup C* Tru Sweet 01750 (Cerestar GmbH) | 1.50 | 2.10 |
| Gelatine 240 Bloom | 8.20 | 9.40 |
| Polydextrose (Litesse^{®} Ultra, Danisco Cultor GmbH) | - | 24.40 |
| Gelber und roter Farbstoff | 0.01 | 0.01 |
| Citronensäure | 0.20 | |
| Kirscharoma, enthaltend 2,5 Gew.-% an Deoxyhesperetindihydrochalkon (I)bezogen auf das Aroma | - | 0.10 |

Anmerkung: Polydextrose ist ein selbst nicht süß schmeckendes Polysaccharid mit niedrigem Brennwert.

### Anwendungsbeispiel 24: Schoko-Cappuccino-Eiscreme

| **Inhaltsstoff** | **A** (Gew.-%), | **B** (Gew.-%) |
|---|---|---|
| Glucose-Fructose-Sirup | 14.10 | 14.10 |
| Saccharose | 10.00 | 7.50 |
| Magermilchpulver | 5.00 | 5.00 |
| Sahne (36% Fettanteil) | 24.00 | 24.00 |
| Emulgator und Stabilisator Cremodan^{®}709VEG (Danisco) | 0.50 | 0.50 |
| Kakaopulver | 5.975 | 5.975 |
| Carrageenan | 0.025 | 0.025 |
| Cappuccino-Aroma | 0.20 | 0.20 |
| Deoxyhesperetindihydrochalkon (I) 2,5%ig in 1,2-Propylenglycol / Ethanol | - | 0.20 |
| Wasser | ad 100 | |

### Anwendungsbeispiel 25: Gelatinekapseln zum Direktverzehr

| **Inhaltsstoff** | **A** (Gew.-%) | **B** (Gew.-%) | **C** (Gew.-%) |
|---|---|---|---|
| | | | |
| **Gelatinehülle:** | | | |
| Glycerin | 2.014 | 2.014 | 2.014 |
| Gelatine 240 Bloom | 7.91 | 7.91 | 7.91 |
| Sucralose | 0.065 | 0.065 | 0.065 |
| Allura Rot | 0.006 | 0.006 | 0.006 |
| Brillantblau | 0.005 | 0.005 | 0.005 |

| | | | |
|---|---|---|---|
| **Kernzusammensetzung:** | | | |
| Pflanzenöl-Triglycerid (Kokosöl - Fraktion) | 79.55 | 68.70 | 58.95 |
| Orangen-Aroma, enthaltend 1 Gew.-% Deoxyhesperetindihydrochalkon (I), bezogen auf das Gesamtgewicht des Aromas | 10.00 | 20.00 | 28.65 |
| Rebaudiosid A 98 % | 0.05 | 0.05 | - |
| 2-Hydroxypropylmenthylcarbonat | 0.33 | 0.20 | - |
| 2-Hydroxyethylmenthylcarbonat | - | 0.20 | 1.00 |
| (1R,3R,4S) Menthyl-3-carbonsäure-N-ethylamid (WS-3) | - | 0.55 | 0.50 |
| (-)-Menthonglycerinacetal (Frescolat MGA) | - | 0.30 | 0.80 |
| Vanillin | 0.07 | - | 0.10 |

Die zum Direktverzehr geeigneten Gelatinekapseln wurden gemäß WO 2004/050069 hergestellt und hatten einen Durchmesser von 5 mm, das Gewichtsverhältnis von Kernmaterial zu Hüllmaterial lag bei 90 : 10. Die Kapseln öffneten sich im Mund innerhalb von weniger als 10 Sekunden und lösten sich vollständig innerhalb von weniger als 50 Sekunden auf.

### Anwendungsbeispiel 26: Kohlensäurehaltiges Getränk (Geschmacksrichtung: Cola)

A = zuckerhaltiges (Vergleichsgetränk) Getränk
B = kalorienreduziertes Getränk
C = kalorienreduziertes Getränk
D = kalorienreduziertes Getränk
E = kalorienreduziertes Getränk

| | **A** | **B** | **C** | **D** | **E** |
|---|---|---|---|---|---|
| **Inhaltsstoff** | **[Gew.-%]** | **[Gew.-%]** | **[Gew.-%]** | **[Gew.-%]** | **[Gew.-%]** |
| Phosphorsäure 85% | 0,635 | 0,635 | 0,635 | 0,635 | 0,635 |
| Zitronensäure, wasser- | 0,064 | 0,064 | 0,064 | 0,064 | 0,064 |
| Koffein | 0,064 | 0,064 | 0,064 | 0,064 | 0,064 |
| Succrose | 63,60 | - | - | - | 12,9 |
| Sucralose | - | 0,126 | - | - | - |
| Erythritol | - | - | 6,000 | - | - |
| Aspartam | - | - | 0,350 | - | 0,07 |
| Steviosid | - | - | - | 0,300 | - |
| Acesulfam K | - | - | - | - | 0,07 |
| Zuckercoloeur | 0,800 | 0,800 | 0,800 | 0,800 | 0,800 |
| Getränke-Emulsion | 1,445 | 1,445 | 1,445 | 1,445 | 1,445 |
| Natriumbenzoat | 0,106 | 0,106 | 0,106 | 0,106 | 0,106 |
| Deoxyhesperetindihydrochalkon (I) 2,5%ig in | - | 1,0 | 1,0 | 1,0 | 1,0 |
| Wasser | ad 100 | | | | |

Die festen Bestandteile bzw. Inhaltsstoffe werden einzeln mit Wasser vermischt, zusammengegeben und mit Wasser auf 100 g aufgefüllt. Anschließend lässt man das erhaltene Konzentrat über Nacht bei Raumtemperatur altern. Schließlich wird 1 Teil Konzentrat mit 5 Teilen kohlensäurehaltigem Wasser gemischt, in Flaschen gefüllt und verschlossen.

### Anwendungsbeispiel 27: Himbeermarmelade (für Diabetiker geeignet)

| **Inhaltsstoffe** | **[g]** |
|---|---|
| Fruktose, kristallin | 485,0 |
| Pektin | 6,5 |
| Natriumcitrat | 1,0 |
| Wasser | 250,0 |
| Himbeeren | 500,0 |
| Kalziumlactat (3%ige Lösung) | 24 |
| Kaliumsorbat (20%ige Lösung) | 5 |
| Deoxyhesperetindihydrochalkon (I) | 0,05 |

30 g Fructose werden mit dem Pektin und dem Natriumcitrat zuerst trocken und erneut nach Zugabe von Wasser vermischt. Dann werden die Himbeeren zugegeben und die Mischung zum Sieden erhitzt. Anschließend werden die restliche 455,0 g Fructose sowie das Kalziumlactat zugegeben. Die Mischung wird auf ein Gewicht von 1000 g eingekocht, unter starkem Rühren etwas abgekühlt und mit Kalziumsorbat sowie Deoxyhesperetindihydrochalkon (I) versetzt. Anschießend wird die Masse bei einer Temperatur von 80 °C in Gläser gefüllt.

### Anwendungsbeispiel 28: Rosinenkekse

A = ohne Zucker-Zusatz
B = zuckerhaltig

| | **Inhaltsstoffe** | **A** | **B** |
|---|---|---|---|
| | | **[Gew.-%]** | **[Gew.-%]** |
| A | Margarine | 11,27 | 11,27 |
| | Magermilchpulver | 1,71 | 1,71 |
| | Sucralose | 0,034 | - |
| | Polydextrose | 19,46 | - |
| | Sucrose | - | 21,494 |
| | Salz | 0,550 | 0,550 |
| B | Vollei | 9,370 | 9,370 |
| C | Mehl | 28,32 | 28,32 |
| | Stärke | 6,83 | 6,83 |
| | Natriumhydrogencarbonat | 0,376 | 0,376 |
| | Halbfertigware E aus Anwendungsbeispiel 5 | 5.0 | 3.0 |
| D | Rosinen | 17,08 | 17,08 |

Die Inhaltsstoffe A werden 2 Minuten lang miteinander vermischt. Nach Zugabe des Volleis wird die Masse für 3 Minuten lang aufgeschlagen, bevor die Inhaltsstoffe C portionsweise untergemischt werden. Zum Schluss werden die Rosinen untergemischt. Dann werden die Kekse portioniert und bei 220 °C für 10 Minuten gebacken. Nach dem Auskühlen werden die Kekse luftdicht verpackt.

### Anwendungsbeispiel 29: Schokoladenkuchen

A = zuckerhaltiger Schokoladenkuchen
B = zuckerreduzierter Schokoladenkuchen

| **Inhaltsstoffe** | **A** | **B** |
|---|---|---|
| | **[g]** | **[g]** |
| Sucrose | 180,0 | - |
| Lactitol Monohydrat | - | 179,5 |
| Butter | 180,0 | 180,0 |
| Vollei | 180,0 | 180,0 |
| Mehl | 150,0 | 150,0 |
| Kakaopulver | 30,0 | 30,0 |
| Saccharin | 0,5 | 0,5 |
| Halbfertigware E aus | 1,0 | 1,0 |
| Anwendungsbeispiel 5 | | |

Zucker (bzw. vorgemischtes Lactitol und Saccharin) wird zusammen mit der Butter aufgeschlagen. Dann wird das Vollei hinzugegeben und ebenfalls untergerührt. Anschließend werden portionsweise das Mehl und das Kakaopulver untergemischt. Die Masse wird dann in eine Form gefüllt und für 60 Minuten bei 180 °C gebacken.

## Patentansprüche

1. Verwendung
- von Deoxyhesperetindihydrochalkon (1) (1-(2,4-Dihydroxy-phenyl)-3-(3-hydroxy-4-methoxy-phenyl)-propan-1-on) 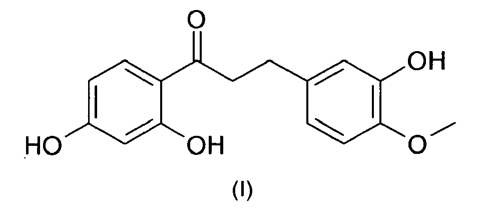 oder
- eines Salzes des Deoxyhesperetindihydrochalkons (I) oder einer Mischung umfassend oder bestehend aus mehreren Salzen des Deoxyhesperetindihydrochalkons (I)
oder
- einer Mischung umfassend oder bestehend aus
Deoxyhesperetindihydrochalkon (I) und
einem Salz oder mehreren Salzen des Deoxyhesperetindihydrochalkons (I), zum Beeinflussen der Stärke von Geschmackseindrücken süß schmeckender, unangenehm, insbesondere bitter, schmeckender oder sowohl süß als auch unangenehm, insbesondere bitter, schmeckender Stoffe oder Stoffgemische.

2. Verwendung wie in Anspruch 1 definiert, wobei das Beeinflussen der Stärke von Geschmackseindrücken darin besteht, dass
- der süße Geschmackseindruck eines süß schmeckenden Stoffes oder Stoffgemisches verstärkt wird
und/oder
- der unangenehme Geschmackseindruck eines unangenehm schmeckenden Stoffes oder Stoffgemisches, insbesondere der bittere Geschmackseindruck eines bitter schmeckenden Stoffes oder Stoffgemisches vermindert oder maskiert wird
und/oder
- der süße Geschmackseindruck eines sowohl süß als auch unangenehm, insbesondere bitter, schmeckenden Stoffes oder Stoffgemisches verstärkt und der unangenehme, insbesondere bittere, Geschmackseindruck des sowohl süß als auch unangenehm, insbesondere bitter, schmeckenden Stoffes oder Stoffgemisches vermindert oder maskiert wird.

3. Verwendung nach Anspruch 1 oder 2, **dadurch gekennzeichnet, dass** der süße Geschmackseindruck eines süß schmeckenden Stoffes oder Stoffgemisches oder eines sowohl süß als auch unangenehm, insbesondere bitter, schmeckenden Stoffes oder Stoffgemisches synergistisch verstärkt wird.

4. Verwendung wie in einem der Ansprüche 1 bis 3 definiert,
in einer Aromakomposition
oder
in einer Zubereitung ausgewählt aus der Gruppe bestehend aus
(1) der Ernährung, Nahrungsergänzung, der Mundpflege oder dem Genuss dienenden Zubereitungen,
(2) kosmetischen Zubereitungen, insbesondere zur Applikation im Bereich des Kopfes,
(3) zur oralen Aufnahme bestimmten pharmazeutischen Zubereitungen,
(4) Würzmischungen zur Verwendung in einer der in (1) bis (3) genannten Zubereitungen,
(5) Halbfertigwaren zur Herstellung einer der in (1) bis (3) genannten Zubereitungen.

5. Aromakomposition
umfassend die oder bestehend aus den folgenden Komponenten:
(a)
- Deoxyhesperetindihydrochalkon (I),
oder
- ein Salz des Deoxyhesperetindihydrochalkons (I) oder eine Mischung umfassend oder bestehend aus mehreren Salzen des Deoxyhesperetin-dihydrochalkons (I),
oder
- eine Mischung umfassend oder bestehend aus Deoxyhesperetindihydrochalkon (I) und
einem Salz oder mehreren Salzen des Deoxyhesperetindihydrochalkons (I),
sowie
(b) einen oder mehrere süß schmeckende Stoffe
und/oder
(c) einen oder mehrere unangenehm, insbesondere bitter schmeckende Stoffe,
und/oder
(d) einen oder mehrere sowohl süß als auch unangenehm, insbesondere bitter, schmeckende Stoffe;
sowie gegebenenfalls
(e) eine oder mehrere Substanzen zum Maskieren oder Vermindern eines unangenehmen, insbesondere eines bitteren Geschmackeindrucks
und/oder
(f) eine oder mehrere weitere Substanzen zum Verstärken eines süßen Geschmackeindrucks,
(g) eine oder mehrere Substanzen zum Maskieren oder Vermindern eines metallischen, kalkigen, sauren oder adstringierenden Geschmackseindrucks,
und/oder
(h) eine oder mehrere Substanzen zum Verstärken eines salzigen oder Umami-Geschmackseindrucks;
wobei die Komponenten (b)-(h) weder Deoxyhesperetindihydrochalkon (I) noch ein Salz des Deoxyhesperetindihydrochalkons (I) sind bzw. enthalten.

6. Aromakomposition gemäß Anspruch 5, **dadurch gekennzeichnet, dass**
- der oder die süß schmeckenden Stoffe (b) ausgewählt sind aus der Gruppe bestehend aus Vanillin, Ethylvanillin, Ethylvanillinisobutyrat (3-Ethoxy-4-isobutyryloxybenzaldehyd), Furaneol^{®} (2,5-Dimethyl-4-hydroxy-3(2H)-furanon) und Abkömmlinge bzw. Derivate (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Derivate (z.B. Ethylmaltol), Cumarin und Derivate, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5)-Hyfuranon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methylbuttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, Phenylacetaldehyd, Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Erythritol, Threitol, Arabitol, Ribitol, Xylitol, Sorbitol, Mannitol, Dulcitol und Lactitol;
und/oder
- der oder die unangenehm, insbesondere bitter schmeckenden Stoffe (c) ausgewählt sind aus der Gruppe bestehend aus Xanthinalkaloide, Xanthine (Coffein, Theobromin, Theophyllin), Alkaloide (Chinin, Brucin, Strychnin, Nicotin), phenolische Glycoside (z.B. Salicin, Arbutin), Flavonoidglycoside (z.B. Hesperidin, Naringin), Chalcone oder Chalconglycoside, hydrolisierbare Tannine (Gallus- oder Elagsäureester von Kohlenhydraten, z.B. Pentagalloylglucose), nichthydrolisierbare Tannine (ggfs. galloylierte Catechine oder Epicatechine und deren Oligomeren, z.B. Proanthyocyanidine oder Procyanidine, Thearubigenin), Flavone (z.B. Quercetin, Taxifolin, Myricetin), andere Polyphenole (gamma-Oryzanol, Kaffeesäure oder deren Ester), terpenoide Bitterstoffe (z.B. Limonoide wie Limonin oder Nomilin aus Zitrusfrüchten, Lupolone und Humolone aus Hopfen, lridoide, Secoiridoide), Absinthin aus Wermut, Amarogentin aus Enzian, metallische Salze (Kaliumchlorid, Natriumsulfat, Magnesiumsalze, Eisensalze, Aluminiumsalze, Zinksalze), pharmazeutische Wirkstoffe (z.B. Fluorchinolon-Antibiotika, Paracetamol, Aspirin, beta-Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, - Panthotensäure), Denatoniumbenzoat oder andere Denatoniumsalze, Sucraloseoctaacetat, Harnstoff, ungesättigte Fettsäuren, insbesondere ungesättigte Fettsäuren in Emulsionen, Aminosäuren (z.B. Leucin, Isoleucin, Valin, Tryptophan, Prolin, Histidin, Tyrosin, Lysin oder Phenylalanin), Peptide (insbesondere Peptide mit einer Aminosäure aus der Gruppe Leucin, Isoleucin, Valin, Tryptophan, Prolin oder Phenylalanin am N- oder C-Terminus).
und/oder
- der oder die sowohl süß als auch unangenehm schmeckenden Stoffe (d) ausgewählt sind aus der Gruppe bestehend aus aus Steviolglycosiden (insbesondere Steviosid und Rebaudiosid A), Rubusosid, Dulcoside, Mogroside, Phyllodulcin, Glycyrrhetinsäure oder Extrakte aus Stevia ssp. (insbesondere Stevia rebaudiana), Luo Han Guo, Rubus suavissimus, Hydrangea dulcis, Glycyrrhyza glabra, Magap, Natriumcyclamat, Acesulfam K, Neohesperidindihydrochalkon, Naringindihydrochalkon, Saccharin, Saccharin-Natriumsalz, Aspartam, Superaspartam, Neotam, Alitam, Sucralose, Lugduname, Carrelame, Sucrononate und Sucrooctate;
und/oder
- die Substanzen (e) zum Maskieren oder Vermindern eines bitteren Geschmackeindrucks ausgewählt sind aus der Gruppe bestehend aus Natriumsalzen (z.B. Natriumchlorid, Natriumlactat, Natriumcitrat, Natriumacetat, Natriumgluconoat), Homoeriodictyol oder dessen Natriumsalzen, 2,4-Dihydroxybenzoesäurevanillylamid, gamma-Aminobutter-säure, Pellitorin und Gingerdionen;
und/oder
- die Substanzen (f) zum Verstärken eines süßen Geschmackeindrucks ausgewählt sind aus der Gruppe bestehend aus Hesperetin, Hydroxyphenylalkadionen, Deoxybenzoinen 4-Hydroxychalkonen, Propenylphenylglycoside (Chavicolglycoside) und Divanillinen.

7. Zubereitung ausgewählt aus der Gruppe bestehend aus
(1) der Ernährung, der Nahrungsergänzung, der Mundpflege oder dem Genuss dienenden Zubereitungen,
(2) kosmetischen Zubereitungen, insbesondere zur Applikation im Bereich des Kopfes,
(3) zur oralen Aufnahme bestimmten pharmazeutischen Zubereitungen,
(4) Würzmischungen zur Verwendung in einer der in (1) bis (3) genannten Zubereitungen,
(5) Halbfertigwaren zur Herstellung einer der in (1) bis (3) genannten Zubereitungen,
umfassend eine Aromakomposition wie in den Ansprüchen 5 und 6 definiert.

8. Zubereitung nach Anspruch 7, ausgewählt aus der der Gruppe bestehend aus
(1) der Ernährung, der Nahrungsergänzung, der Mundpflege oder dem Genuss dienenden Zubereitungen,
(2) kosmetischen Zubereitungen, insbesondere zur Applikation im Bereich des Kopfes,
(3) zur oralen Aufnahme bestimmten pharmazeutischen Zubereitungen;
wobei die Zubereitung (1), (2) oder (3) bezogen auf ihr Gesamtgewicht 0,0001 Gew.-% (1 ppm) bis 0,1 Gew.-% (1000 ppm),
bevorzugt 0,0001 Gew.-% (1 ppm) bis 0,05 Gew.-% (500 ppm),
besonders bevorzugt 0,001 Gew.-% (10 ppm) bis 0,025 Gew.-% (250 ppm), an (i) Deoxyhesperetindihydrochalkon (1) und (ii) dessen Salzen (Komponente (a)) umfasst.

9. Zubereitung nach Anspruch 7,
ausgewählt aus der der Gruppe bestehend aus
(4) Würzmischungen zur Verwendung in einer der in (1) bis (3) genannten Zubereitungen,
(5) Halbfertigwaren zur Herstellung einer der in Anspruch 7 definierten Zubereitungen (1)-(3),
wobei die Zubereitung (5) bezogen auf ihr Gesamtgewicht 0,0001 Gew.-% bis 95 Gew.-%,
vorzugsweise 0,001 Gew.-% bis 95 Gew.-%,
bevorzugt 0,001 bis 80 Gew.-%,
besonders bevorzugt 0,01 Gew.-% bis 50 Gew.-%,
an (i) Deoxyhesperetindihydrochalkon (1) und (ii) dessen Salzen (Komponente (a)) umfasst.

10. Zubereitung nach einem der Ansprüche 7 bis 9, **dadurch gekennzeichnet, dass** die Gesamtmenge an (i) Deoxyhesperetindihydrochalkon (I) und (ii) dessen Salzen (Komponente (a)) in der Zubereitung ausreicht, um im Vergleich mit einer Zubereitung, die bei ansonsten identischer Zusammensetzung weder (i) Deoxyhesperetindihydrochalkon (I) noch (ii) dessen Salze umfasst, eine Steigerung des in Sucroseäquivalenten zu bestimmenden Süßeeindrucks um 10 % oder mehr, vorzugsweise 20 % oder mehr besonders bevorzugt 35% oder mehr zu vermitteln.

11. Zubereitung nach einem der Ansprüche 7 bis 9, **dadurch gekennzeichnet, dass** die Gesamtmenge an bitter schmeckenden Stoffen (c) und/oder sowohl süß als auch bitter schmeckenden Stoffen (d) in der Zubereitung ausreicht, um im Vergleich mit einer Zubereitung, die bei ansonsten identischer Zusammensetzung weder (i) Deoxyhesperetindihydrochalkon (I) noch (ii) dessen Salze umfasst, als bitterer Geschmack wahrgenommen zu werden, und
die Gesamtmenge an (i) Deoxyhesperetindihydrochalkon (I) und (ii) dessen Salzen (Komponente (a)) in der Zubereitung ausreicht, um den bitteren Geschmack des oder der bitter schmeckenden Stoffe (c) bzw. des oder der sowohl süß als auch bitter schmeckenden Stoffe (d) zu maskieren oder im Vergleich mit einer Zubereitung, die bei ansonsten identischer Zusammensetzung weder (i) Deoxyhesperetindihydrochalkon (I) noch (ii) dessen Salze umfasst, zu vermindern.

12. Verfahren zur Herstellung
- einer Aromakomposition wie in den Ansprüchen 5 und 6 definiert bzw.
- einer Zubereitung wie in den Ansprüchen 7 bis 11 definiert, umfassend die Schritte
(1) Her- oder Bereitstellen der folgenden Komponenten:
(a)
- Deoxyhesperetindihydrochalkon (I)
oder
- ein Salz des Deoxyhesperetindihydrochalkons (I) oder eine Mischung umfassend oder bestehend aus mehreren Salzen des Deoxyhesperetin-dihydrochalkons (I)
oder
- eine Mischung umfassend oder bestehend aus Deoxyhesperetindihydrochalkon (I) und
einem Salz oder mehreren Salzen des Deoxyhesperetindihydrochalkons (I),
sowie
(b) einen oder mehrere weitere süß schmeckende Stoffe und/oder
(c) einen oder mehrere unangenehm schmeckende Stoffe und/oder
(d) einen oder mehrere sowohl süß als auch unangenehm schmeckende Stoffe;
sowie weitere Komponenten der Aromakomposition bzw. der Zubereitung, wobei die Komponenten (b)-(d) und die weiteren Komponenten weder Deoxyhesperetindihydrochalkon (I) noch ein Salz des Deoxyhesperetindihydrochalkons (I) sind bzw. enthalten;
(2) Mischen der Komponenten (a) sowie (b) und/oder (c) und/oder (d) mit den weiteren Komponenten.

13. Verfahren zum Beeinflussen der Stärke eines Geschmackseindrucks von süß schmeckenden, unangenehm, insbesondere bitter, schmeckenden oder sowohl süß als auch unangenehm, insbesondere bitter, schmeckenden Stoffen, mit folgendem Schritt:
- Mischen der folgenden Komponenten
(a)
- Deoxyhesperetindihydrochalkon (I)
oder
- ein Salz des Deoxyhesperetindihydrochalkons (I) oder eine Mischung umfassend oder bestehend aus mehreren Salzen des Deoxyhesperetin-dihydrochalkons (I),
oder
- eine Mischung umfassend oder bestehend aus Deoxyhesperetindihydrochalkon (I) und
einem Salz oder mehreren Salzen des Deoxyhesperetindihydrochalkons (I),
sowie
(b) einen oder mehrere weitere süß schmeckende Stoffe
und/oder
(c) einen oder mehrere unangenehm, insbesondere bitter, schmeckende Stoffe
und/oder
(d) einen oder mehrere sowohl süß als auch unangenehm, insbesondere bitter, schmeckende Stoffe;
sowie ggf. weitere Komponenten
wobei die Komponenten (b)-(d) sowie die weiteren Komponenten weder Deoxyhesperetindihydrochalkon (I) noch ein Salz des Deoxyhesperetindihydrochalkons (I) sind bzw. enthalten,
wobei die Gesamtmenge an Komponente (a) in der Mischung ausreicht, um die Stärke des Geschmackseindrucks des oder der süß schmeckenden Stoffe (b), des oder der unangenehm, insbesondere bitter, schmeckenden Stoffe (c) bzw. des oder der sowohl süß als auch unangenehm, insbesondere bitter, schmeckenden Stoffe (d) zu beeinflussen.

14. Verfahren nach Anspruch 13,
wobei die Gesamtmenge an Komponente (a) in der Mischung ausreicht,
- den süßen Geschmackseindruck eines süß schmeckenden Stoffes oder Stoffgemisches synergistisch zu verstärken,
und/oder
- den unangenehmen Geschmackseindruck eines unangenehm schmeckenden Stoffes oder Stoffgemisches, insbesondere den bitteren Geschmackseindruck eines bitter schmeckenden Stoffes oder Stoffgemisches zu vermindern oder zu maskieren
und/oder
- den süßen Geschmackseindruck eines sowohl süß als auch unangenehm, insbesondere bitter schmeckenden Stoffes oder Stoffgemisches synergistisch zu verstärken und den unangenehmen, insbesondere bitteren, Geschmackseindruck des sowohl süß als auch unangenehm, insbesondere bitter, schmeckenden Stoffes oder Stoffgemisches zu vermindern oder zu maskieren.

## Claims

1. A use
- of deoxy hesperetin dihydrochalcone (I)
(1-(2,4-dihydroxy-phenyl)-3-(3-hydroxy-4-methoxy-phenyl)-propan-1-one) 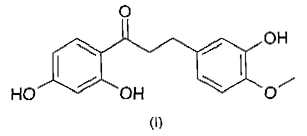
or
- a salt of the deoxy hesperetin dihydrochalcone (I) or a mixture comprising or consisting of a plurality of salts of the deoxy hesperetin dihydrochalcone (I)
or
- a mixture comprising or consisting of
deoxy hesperetin dihydrochalcone (I) and
a salt or a plurality of salts of the deoxy hesperetin dihydrochalcone (I),
to influence the strength of taste impressions of sweet-tasting, unpleasant-, in particular bitter-, tasting or both sweet- and also unpleasant-, in particular bitter-, tasting substances or mixtures of substances.

2. The use as defined in claim 1, wherein the influencing of the strength of taste impressions the influencing of the strength of taste impressions involves
- the sweet taste impression of a sweet-tasting substance or mixture of substances being intensified
and/or
- the unpleasant taste impression of an unpleasant-tasting substance or mixture of substances, in particular the bitter taste impression of a bitter-tasting substance or mixture of substances being reduced or masked
and/or
- the sweet taste impression of a both sweet- and also unpleasant-, in particular bitter-, tasting substance or mixture of substances being intensified and the unpleasant, In particular bitter, taste impression of the both sweet- and also unpleasant-, in particular bitter-, tasting substance or mixture of substances being reduced or masked.

3. The use as claimed in claim 1 or 2, wherein the sweet taste impression of a sweet-tasting substance or mixture of substances or a both sweet- and unpleasant-, in particular bitter-, tasting substance or mixture of substances is synergistically intensified.

4. The use as defined in one of claims 1 to 3,
in an aroma composition
or
in a preparation selected from the group consisting of
(1) preparations serving for nourishment, food supplements, oral care or pleasure,
(2) cosmetic preparations, in particular for application in the region of the head,
(3) pharmaceutical preparations intended for oral administration,
(4) flavoring mixtures for use in one of the preparations mentioned in (1) to (3),
(5) semi-finished products for manufacturing one of the preparations mentioned in (1) - (3).

5. An aroma composition
comprising or consisting of the following components:
(a)
- deoxy hesperetin dihydrochalcone (I),
or
- a salt of the deoxy hesperetin dihydrochalcone (I), or a mixture comprising or consisting of a plurality of salts of the deoxy hesperetin dihydrochalcone (I),
or
- a mixture comprising or consisting of deoxy hesperetin dihydrochalcone (I) and
a salt or a plurality of salts of the deoxy hesperetin dihydrochalcone (I),
and
(b) one or more sweet-tasting substances
and/or
(c) one or more unpleasant, in particular bitter-tasting substances,
and/or
(d) one or more both sweet- and unpleasant-, in particular bitter-, tasting substances;
and if applicable
(e) one or more substances to mask or reduce an unpleasant, in particular a bitter, taste impression
and/or
(f) one or more further substances for intensifying a sweet taste impression, and/or
(g) one or more substances to mask or reduce a metallic, chalky, sour, or astringent taste impression,
and/or
(h) one or more substances to intensify a salty or umami taste impression;
wherein components (b)-(h) neither are nor contain deoxy hesperetin dihydrochalcone (I) nor a salt of the deoxy hesperetin dihydrochalcone (I).

6. The aroma composition as claimed in claim 5, wherein
- the sweet-tasting substance(s) (b) is or are selected from the group consisting of vanillin, ethylvanillin, ethylvanillin isobutyrate (=3-ethoxy-4-isobutyryloxybenzaldehyde), Furaneol® (2,5-dimethyl-4-hydroxy-3(2H)-furanone) and derivatives thereof (e.g. homofuraneol, 2-ethyl-4-hydroxy-5-methyl-3(2H)-furanone), homofuronol (2-ethyl-5-methyl-4-hydroxy-3(2H)-furanone and 5-ethyl-2-methyl-A-hydroxy-3(2H)-furanone), maltol and derivatives thereof (e.g. ethylmaltol), coumarin and derivatives thereof, gamma-lactones (e.g. gamma-undecalactone, gamma-nonalactone), deltalactones (e.g. 4-methyl-delta-lactone, massoilactone, delta-decalactone, tuberolactone), methyl sorbate, divanillin, 4-hydroxy-2(or 5)-ethyl-5(or 2)-methyl-3(2H)furanone, 2-hydroxy-3-methyl-2-cyclopentenones, 3-hydroxy-4,5-dimethyl-2(5H)-furanone, fruit esters and fruit lactones (e.g. n-butyl acetate, Isoamyl acetate, ethyl propionate, ethyl butyrate, n-butyl butyrate, isoamyl butyrate, ethyl 3-methyl-butyrate, ethyl n-hexanoate, allyl n-hexanoate, n-butyl n-hexanoate, ethyl n-octanoate, ethyl-3-methyl-3-phenylglycidate, ethyl-2-trans-4-cis-decadienoate), 4-(p-hydroxyphenyl)-2-butanone, 1,1-dimethoxy-2,2,5-trimethyl-4-hexane, 2,6-dimethyl-5-hepten-1-al, phenylacetaldehyde, sucrose, trehalose, lactose, maltose, melizitose, raffinose, palatinose, lactulose, D-fructose, D-glucose, D-galactose, L-rhamnose, D-sorbose, D-mannose, D-tagatose, D-arabinose, L-arabinose, D-ribose, D-glyceraldehyde, erythritol, threitol, arabitol, ribitol, xylitol, sorbitol, mannitol, dulcitol and lactitol;
and/or
- the unpleasant-, in particular bitter-, tasting substance(s) (c) is or are selected from the group consisting of xanthine alkaloids, xanthines (caffeine, theobromine, theophylline), alkaloids (quinine, brucine, strychnine, nicotine), phenolic glycosides (e.g. salicin, arbutin), flavonoid glycosides (e.g. hesperidine, naringin), chalcones or chalcone glycosides, hydrolysable tannins (gallic or ellagic acid esters of carbohydrates, e.g. pentagalloylglucose), non-hydrolysable tannins (optionally galloylated catechols or epicatechols and oligomers thereof, e.g. proanthyocyanidines or procyanidines, thearubigin), flavones (e.g. quercertin, taxifolin, myricetin), other polyphenols (gamma-oryzanol, coffeic acid or esters thereof), terpenoid bitter substances (e.g. limonoids such as limonine or nomilin from citrus fruits, lupolones and humulones from hops, iridoids, secoiridoids), absinthin from wormwood, amarogentin from gentian, metal salts (potassium chloride, sodium sulfate, magnesium salts, iron salts, aluminum salts, zinc salts), pharmaceutical active ingredients (e.g, fluoroquinolone antibiotics, paracetamol, aspirin, beta-lactam antibiotics, ambroxol, propylthiouracil [PROP], guaifenesin), vitamins (for example vitamin H, vitamins from the B group, such as vitamin B1, B2, B6, B12, niacin, pantothenic acid), denatonium benzoate or other denatonium salts, sucralose octaacetate, urea, unsaturated fatty acids, in particular unsaturated fatty acids in emulsions, amino acids (e.g. leucine, isoleucine, valine, tryptophan, proline, histidine, tyrosine, lysine or phenylalanine), peptides (in particular peptides having an amino acid from the group leucine, isoleucine, valine, tryptophan, proline or phenylalanine at the N- or C-terminus);
and/or
- the both sweet- and unpleasant-tasting substance(s) (d) is or are selected from the group consisting of steviolglycosides (in particular stevioside and rebaudioside A), rubusoside, dulcoside, mogroside, phyllodulcin, glycyrrhetin acid or extracts of *Stevia* ssp. (in particular *Stevia rebaudiana*), Luo Han Guo, *Rubus suavissimus, Hydrangea dulcis*, *Glycyrrhyza glabra*, magap, sodium cyclamate, acesulfame K, neohesperidine dihydrochalcone, naringin hydrochalcone, saccharin, saccharin sodium salt, aspartame, superaspartame, neotame, alitame, sucralose, lugduname, carrelame, sucrononate, sucrooctate;
and/or
- the substances (e) to mask or reduce a bitter taste impression are selected from the group consisting of sodium salts (e.g. sodium chloride, sodium lactate, sodium citrate, sodium acetate, sodium gluconoate), homoeriodictyol or its sodium salts, 2,4-dihydroxybenzoic acid vanillyl amide, gammaaminobutyric acid, pellitorine and gingerdione;
and/or
- the substances (f) for intensifying a sweet taste impression are selected from the group consisting of hesperetin, hydroxyphenylalkane diones, deoxybenzoins, 4-hydroxychalcones, propenylphenylglycosides (chavicol glycosides) and divanillins.

7. A preparation selected from the group consisting of
(1) preparations serving for nourishment, food supplements, oral care or pleasure,
(2) cosmetic preparations, in particular for application in the region of the head,
(3) pharmaceutical preparations intended for oral administration,
(4) flavoring mixtures for use in one of the preparations mentioned in (1) to (3),
(5) semi-finished products for manufacturing one of the preparations mentioned in (1) to (3),
comprising an aroma composition as defined in claims 5 and 6.

8. The preparation as claimed in claim 7, selected from the group consisting of
(1) preparations serving for nourishment, food supplements, oral care or pleasure.
(2) cosmetic preparations, in particular for application in the region of the head,
(3) pharmaceutical preparations intended for oral administration; wherein the preparation (1), (2) or (3) based on its total weight comprises 0.0001% by weight (1 ppm)-0.1% by weight (1000 ppm), preferably 0.0001% by weight (1 ppm)-0.05% by weight (500 ppm), particularly preferably 0,001% by weight (10 ppm)-0.025% by weight (250 ppm), of (i) deoxy hesperetin dihydrochalcone (I) and (ii) its salts (component (a)).

9. The preparation as claimed in claim 7,
selected from the group consisting of
(4) flavoring mixtures for use in one of the preparations mentioned in (1) - (3),
(5) semi-finished products for manufacturing one of the preparations (1) - (3) mentioned in claim 7,
wherein the preparation (5) based on its total weight comprises 0.0001 % by weight - 95% by weight,
in particular 0.001 % by weight - 95% by weight,
preferably 0.001 - 80% by weight,
particularly preferably 0.01% by weight - 50% by weight,
of (i) deoxy hesperetin dihydrochalcone (I) and (ii) its salts (component (a)).

10. The preparation as claimed in one of claims 7-9, wherein
the total quantity of (i) deoxy hesperetin dihydrochalcone (I) and (ii) its salts (component (a)) in the preparation is sufficient, compared with a preparation, which with an otherwise identical composition comprises neither (i) deoxy hesperetin dihydrochalcone (I) nor (ii) its salts, to bring about an increase in the sweetness impression to be measured in sucrose equivalents by 10% or more, preferably 20% or more, particularly preferably 35% or more.

11. The preparation as claimed in one of claims 7-9, wherein
the total quantity of bitter-tasting substances (c) and/or both sweet- and bitter-tasting substances (d) in the preparation is sufficient, compared with a preparation, which with an otherwise identical composition comprises neither (I) deoxy hesperetin dihydrochalcone (I) nor (ii) its salts, to be perceived as a bitter taste, and
the total quantity of (i) deoxy hesperetin dihydrochalcone (I) and (li) its salts (component (a)) in the preparation is sufficient, to mask the bitter taste of the bitter tasting substance(s) (c) or of the both sweet- and bitter-tasting substance(s) (d) or compared with a preparation which with an otherwise identical composition contains neither (i) deoxy hesperetin dihydrochalcone (I) nor (ii) its salts, to reduce this.

12. A method for manufacturing
- an aroma composition as defined in claims 5 and 6
or
- a preparation as defined in claims 7 - 11,
comprising the following steps
(1) providing or preparation of the following components:
(a)
- deoxy hesperetin dihydrochalcone (I)
or
- a salt of the deoxy hesperetin dihydrochalcone (I) or a mixture comprising or consisting of a plurality of salts of the deoxy hesperetin dihydrochalcone (I)
or
- a mixture comprising or consisting of deoxy hesperetin dihydrochalcone (I) and
a salt or a plurality of salts of the deoxy hesperetin dihydrochalcone (I),
and
(b) one or more further sweet-tasting substances and/or
(c) one or more unpleasant-tasting substances and/or
(d) one or more both sweet- and unpleasant-tasting substances;
and further components of the aroma composition or preparation,
wherein components (b)-(d) and the further components neither are nor contain deoxy hesperetin dihydrochalcone (I) nor a salt of deoxy hesperetin dihydrochalcones (I);
(2) mixing of components (a) and (b) and/or (c) and/or (d) with the further components.

13. A method for influencing the strength of a taste impression of sweet-tasting, unpleasant-, in particular bitter-, tasting or both sweet- and unpleasant-, in particular bitter-, tasting substances, with the following step:
- mixing of the following components
(a)
- deoxy hesperetin dihydrochalcone (I)
or
- a salt of the deoxy hesperetin dihydrochalcone (I) or a mixture comprising or consisting of a plurality of salts of the deoxy hesperetin dihydrochalcone (I),
or
- a mixture comprising or consisting of deoxy hesperetin dihydrochalcone (I) and
a salt or a plurality of salts of the deoxy hesperetin dihydrochalcone (I),
and
(b) one or more further sweet-tasting substances and/or
(c) one or more unpleasant-, in particular bitter-, tasting substances and/or
(d) one or more both sweet- and unpleasant-, in particular bitter-, tasting substances;
and if necessary further components
wherein components (b)-(d) and the further components neither are nor contain deoxy hesperetin dihydrochalcone (I) nor a salt of deoxy hesperetin dihydrochalcone (I),
wherein the total quantity of component (a) in the mixture is sufficient to influence the strength of the taste impression of the sweet-tasting substance(s) (b), of the unpleasant-, in particular bitter-, tasting substance(s) (c) or the both sweet- and unpleasant-, in particular bitter-, tasting substance(s) (d).

14. The method as claimed in claim 13,
wherein the total quantity of components (a) In the mixture is sufficient,
- to synergistically intensify the sweet taste impression of a sweet-tasting substance or mixture of substances,
and/or
- to reduce or to mask the unpleasant taste impression of an unpleasant-tasting substance or mixture of substances, in particular the bitter taste impression of a bitter-tasting substance or mixture of substances
and/or
to synergistically intensify the sweet taste impression of a both sweet- and unpleasant-, in particular bitter-tasting substance or mixture of substances and to reduce or modify the unpleasant, in particular bitter, taste impression of the both sweet- and unpleasant-. In particular bitter-, tasting substance or mixture of substances.

## Revendications

1. Utilisation
- de désoxyhespérétine-dihydrochalcone (I) (1-(2,4-dihydroxy-phényl)-3-(3-hydroxy-4-méthoxyphényl)propan-1-one) 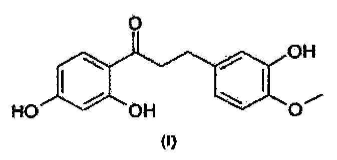
ou
- d'un sel de désoxyhespérétine-dihydxochalcone (I) ou d'un mélange comprenant ou consistant en plusieurs sels de désoxyhespérétine-dihydrochalcone (I)
ou
- d'un mélange comprenant ou consistant en désoxyhespérétine-dihydrochalcone (I) et
en un sel ou plusieurs sels de désoxyhespérétine-dihydrochalcone (I) pour influer sur l'intensité d'impressions gustatives de substances ou de mélanges de substances ayant un goût sucré, désagréable, en particulier amer ou à la fois un goût sucré et également désagréable, en particulier amer.

2. Utilisation telle que définie dans la revendication 1, dans laquelle l'effet sur l'intensité des impressions gustatives consiste à
- renforcer l'impression gustative sucrée d'une substance ou d'un mélange de substances ayant un goût sucré
et/ou
- réduire ou masquer l'impression gustative désagréable, d'une substance ou d'un mélange de substances ayant un goût désagréable, en particulier, l'impression gustative amère d'une substance ou d'un mélange de substances ayant un goût amer
et/ou
- renforcer l'impression gustative sucrée d'une substance ou d'un mélange de substances ayant un goût à la fois sucré et également désagréable, en particulier, un goût amer et réduire ou masquer l'impression gustative désagréable, en particulier amère de la substance ou du mélange de substances ayant un goût à la fois sucré et également désagréable, en particulier amer.

3. Utilisation selon la revendication 1 ou 2, **caractérisée en ce que** l'impression gustative sucrée d'une substance ou d'un mélange de substances ayant un goût sucré ou d'une substance ou d'un mélange de substances ayant un goût à la fois sucré et également désagréable, en particulier amer, est renforcée de façon synergique.

4. Utilisation selon l'une des revendications 1 à 3,
dans une composition axiomatique
ou
dans une préparation choisie dans le groupe comprenant
(1) des préparations servant à l'alimentation, en complément alimentaire, aux soins buccaux ou à la consommation,
(2) des préparations cosmétiques, en particulier, pour l'application dans la région de la tête,
(3) des préparations pharmaceutiques destinées à l'absorption orale,
(4) des mélanges d'épices pour l'utilisation dans l'une des préparations mentionnées aux points (1) à (3),
(5) des produits semi finis pour la production de l'une des préparations (1) à (3).

5. Composition aromatique
comprenant ou consistant en les composants suivants :
(a)
- la désoxyhespérétine-dihydrochalcone (I)
ou
- un sel de désoxyhespérétine-dihydrochalcone (I) ou un mélange comprenant ou consistant en plusieurs sels de désoxyhespérétine-dihydrochalcone (I)
ou
- un mélange comprenant ou consistant en désoxyhespérétine-dihydrochalcone (I) et
en un sel ou plusieurs sels de désoxyhespérétine-dihydrochalcone (I)
et
(b) une ou plusieurs substances ayant un goût sucré
et/ou
(c) une ou plusieurs substances ayant un goût désagréable, en particulier amer,
et/ou
(d) une ou plusieurs substances ayant un goût à la fois sucré et également désagréable, en particulier, amer ;
et éventuellement
(e) une ou plusieurs substances pour masquer ou réduire une impression gustative désagréable, en particulier amère
et/ou
(f) une ou plusieurs autres substances pour renforcer une impression gustative sucrée,
(g) une ou plusieurs substances pour masquer ou réduire une impression gustative métallique, crayeuse, acide ou astringente
et/ou
(h) une ou plusieurs substances pour renforcer une impression gustative salée ou d'umami ;
les composants (b) à (h) ne contenant ni désoxyhespérétine-dihydrochalcone (I) ni un sel de - de désoxyhespérétine-dihydrochalcone (I).

6. Composition aromatique selon la revendication 5, **caractérisée en ce que**
- la ou les substance (s) ayant un goût sucré (b) sont choisies dans le groupe comprenant la vanilline, l'éthylvanilline, l'éthylvanilline-isobutyrate (3-éthoxy-4-isobutyryloxybenzaldéhyde), le Furaneol® (2,5-diméthyl-4-hydroxy-3(2H)-furanone) et les produits en découlant ou dérivés (par exemple homofuranéol, 2-éthyl-4-hydroxy-5-méthyl-3(2H)-furanone) l'homofuronol (2-éthyl-5-méthyl-4-hydroxy-3(2H)-furanone et 5-éthyl-2-méthyl-4-hydroxy-3(2H)-furanone), le maltol et ses dérivés (par exemple, éthylmaltol), la coumarine et ses dérivés, la gamma-lactone (par exemple, gammaundécalactone, gamma-nonalactone), la delta-lactone (par exemple, 4-méthyldeltalactone, massoia-lactone, deltadécalactone, tubérolactone), le méthylsorbate, la divanilline, la 4-hydroxy-2 (ou 5)-éthyl-5 (ou 2)-méthyl-3(2H)furanone, la 2-hydroxy-3-méthyl-2-cyclopenténone, la 3-hydroxy-4,5-diméthyl-2(5H)-furanone, les esters de fruits et lactones de fruits (par exemple, acide acétique-n-butylester, acide acétique isoamylester, acide propionique-éthylester, acide butyrique-éthylester, acide butyrique-n-butylester, acide butyrique isoamylester, 3-méthylacide butyrique éthylester, acide n-hexanoique éthylester, acide n-hexanoïque-allylester, acide n-hexanoïque-n-butylester, acide n-octanoïque éthylester, éthyl-3-méthyl-3-phénylglycidate, éthyl-2-trans-4-cis-décadiénoate), la 4-(p-hydroxyphényl)-2-butanone, le 1,1-diméthoxy-2,2,5-triméthyl-4-hexane, le 2,6-diméthyl-5-heptén-1-al, le phénylacétaldéhyde, le saccharose, le tréhalose, le lactose, le maltose, le mélizitose, le raffinose, le palatinose, le lactulose, le D-fructose, le D-glucose, le D-galactose, le L-rhamnose, le D-sorbose, le D-mannose, le D-tagalose, le D-arabinose, le L-arabinose, le D-ribose, le D-glycéraldéhyde, l'érythritol, le thréitol, l'arabitol, le ribitol, le xylitol, le sorbitol, le mannitol, le dulcitol et le lactitol ;
et/ou
- la ou les substances ayant un goût désagréable, en particulier amer (c) sont choisies dans le groupe comprenant les alcaloïdes de xanthine, la xanthine (caféine, théobromine, théophylline), les alcaloïdes (quinine, brucine, strychnine, nicotine), les glycosides phénoliques (par exemple, salicine, arbutine), les glycosides de flavonoïdes (par exemple, hespéridine, naringine), les chalcones ou glycosides de chalcone, les tannins hydrolysables (esters d'acide gallique ou ellagique de glucides, par exemple pentagalloylglucose), les tannins non hydrolysables (éventuellement, catéchines galloylées ou épicatéchines et leurs oligomères, par exemple, pro-anthyocyanidine ou procyanidine, théarubigénine), les flavones (par exemple, quercétine, taxifoline, myricétine), d'autres polyphénols (gamma-oryzanol, acide caféique et leurs esters), les substances amères terpénoïdes (par exemple, limonoïdes tels que limonine ou nomiline d'agrumes, lupolones et humolones de houblon, iridoïdes, sécoiridoïdes), l'absinthine d'armoise, l'amarogentine de gentiane, les sels métalliques (chlorure de potassium, sulfate de sodium, sels de magnésium, sels de fer, sels d'aluminium, sels de zinc), les substances actives pharmaceutiques (par exemple, antibiotiques fluoroquinolones, paracétamol, aspirine, antibiotiques bêta-lactaine, ambroxol, propylthio-uracile [PROP], guaïfénésine), les vitamines (par exemple, vitamine H, vitamines de la série B telles que vitamine B1, B2, B6, B12, niacine, acide pantothénique), le benzoate de dénatonium ou autres sels de dénatonium, l'octa-acétate de sucralose, l'urée, les acides gras insaturés, en particulier les acides gras insaturés en émulsions, les acides aminés (par exemple, leucine, isoleucine, valine, tryptophane, proline, histidine, tyrosine, lysine ou phénylalanine), les peptides (en particulier, peptides avec un acide aminé du groupe leucine, isoleucine, valine, tryptophane, proline ou phénylalanine en terminaison N ou C)
et/ou
- la ou les substance (s) ayant un goût à la fois sucré et également désagréable (d) choisies dans le groupe comprenant les stéviolglycosides (en particulier stévioside et rébaudioside A), rubusoside, dulcoside, mogroside, phyllodulcine, l'acide glycyrrhétinique ou les extraits de *stevia ssp.* (en particulier, *Stevia rebaudiana),* luo han guo, *Rubus suavissimus, Hydrangea dulcis, Glycyrrhyza glabra,* le magap, le cyclamate de sodium, l'acésulfam K, la néohespéridinedihydrochalcone, la naringine-dihydrochalcone, la saccharine, le sel de sodium de saccharine, l'aspartam, le super-aspartame, le néotam, l'alitam, le sucralose, le lugduname, le carrélame, le sucrononate et le sucrooctate ;
et/ou
- les substances (e) pour masquer ou réduire une impression gustative amère, choisies dans le groupe comprenant les sels de sodium (par exemple, chlorure de sodium, lactate de sodium, citrate de sodium, acétate de sodium, gluconate de sodium), l'homoériodictyol ou ses sels de sodium, l'acide 2,4-dihydrobanzoique vanillylamide, l'acide gamma-amino-butyrique, la pellitorine et les gingerdiones ;
et/ou
- les substances (f) pour renforcer une impression gustative sucrée, choisies dans le groupe comprenant l'hespérétine, les hydroxyphénylalcadiones, les désoxybenzoïnes, les 4-hydroxychalcones, les propénylphénylglycosides (chavicolglycosides) et les divanillines.

7. Réparation choisie dans le groupe comprenant
(1) des préparations servant à l'alimentation, en complément alimentaire, aux soirs buccaux ou à la consommation,
(2) des préparations cosmétiques, en particulier, pour l'application dans la région de la tête,
(3) des préparations pharmaceutiques destinées à l'absorption orale,
(4) des mélanges d'épices pour l'utilisation dans l'une des préparations mentionnées aux points (1) à (3),
(5) des produits semi finis pour la, production de l'une des préparations (1) à (3),
comprenant une composition aromatique telle que définie dans les revendications 5 et 6.

8. Préparation selon la revendication 7, choisie dans le groupe comprenant
(1) des préparations servant à l'alimentation, en complément alimentaire, aux soins buccaux ou à la consommation,
(2) des préparations cosmétiques, en particulier, pour l'application dans la région de la tête,
(3) des préparations pharmaceutiques destinées à l'absorption orale ;
la préparation (1), (2) ou (3) comprenant par rapport à son poids total,
0,0001 % en poids (1 ppm) à 0,1 % en poids (1000 ppm),
de préférence, 0,0001 % en poids (1 ppm) à 0,05 % en poids (500 ppm),
de manière particulièrement préférée 0,001 % en poids (10 ppm) à 0,025 % en poids (250 ppm) de (i) désoxyhespérétine-dihydrochalcone (I) et (ii) ses sels (composants (a)).

9. Préparation selon la revendication 7
choisie dans le groupe comprenant
(4) des mélanges d'épices pour l'utilisation dans l'une des préparations mentionnées aux points (1) à (3),
(5) des produits semi finis pour la production de l'une des préparations (1) à (3) définie dans la revendication 7,
la préparation (5) comprenant, par rapport à son poids total,
0,0001 % en poids à 95 % en poids,
de préférence 0,001 % en poids à 95 % en poids,
de préférence 0,001 à 80 % en poids,
de manière particulièrement préférée, 0,01 % en poids à 50 % en poids de (i) désoxyhespérétine-dihydrochalcone (I) et (ii) ses sels (composants (a)).

10. Préparation selon l'une des revendications 7 à 9, **caractérisée en ce que** la quantité totale de (i) désoxyhespérétine-dihydrochalcone (I) et (ii) ses sels (composants (a)) dans la préparation suffit pour conférer, par rapport à une préparation qui, ayant une composition par ailleurs identique, ne comprend ni (i) désoxyhespérétine-dihydrochalcone (I) ni (ii) ses sels, une augmentation de l'impression sucrée à déterminer en équivalents de saccharose, de 10 % ou plus, de préférence, de 20 % ou plus, de manière particulièrement préférée, de 35 % ou plus.

11. Préparation selon l'une des revendications 7 à 9, **caractérisée en ce que** la quantité totale de substances ayant un goût amer (c) et/ou de substances ayant un goût à la fois sucré et également amer (d) dans la préparation suffit pour percevoir, par rapport à une préparation qui ayant une Composition par ailleurs identique, ne comprend ni (i) désoxyhespérétine-dihydrochalcone (I) ni (ii) ses sels, un goût amer et
la quantité totale de (i) désoxyhespérétine-dihydrochalcone (I) et (ii) ses sels (composants (a)) dans la préparation suffit pour masquer ou réduire le goût amer de la substance ayant un goût amer (c) ou de la ou des substances ayant un goût à la fois sucré et également amer (d), par rapport à une préparation qui, ayant une composition par ailleurs identique, ne comprend ni (i) désoxyhespérétine-dihydrochalcone (I) ni (ii) ses sels.

12. Procédé de production
- d'une composition aromatique telle que définie dans les revendications 5 et 6 ou
- d'une préparation telle que définie dans les revendications 7 à 11, comprenant les étapes de
(1) production ou mise à disposition des composants suivants :
(a)
- désoxyhespérétine-dihydrochalcone (I)
ou
- un sel de désoxyhespérétine-dihydrochalcone (I) ou un mélange comprenant ou consistant en plusieurs sels de désoxyhespérétine-dihydrochalcone (I) ou
- un mélange comprenant ou consistant en désoxyhespérétine-dihydrochalcone (I) et
un sel ou plusieurs sels de désoxyhespérétine-dihydrochalcone (I),
et
(b) une ou plusieurs autres substances ayant un goût sucré
et/ou
(c) une ou plusieurs substances ayant un goût désagréable
et/ou
(d) une ou plusieurs substances ayant un goût à la fois sucré et également désagréable ;
ainsi que d'autres composants de la composition aromatique ou de la préparation, les composants (b) à (d) et les autres composants ne contenant ni désoxyhespérétine-dihydrochalcone (I) ni sel de désoxyhespérétine-dihydrochalcone (I) ;
(2) un mélange des composants (a) et (b) et/ou (c) et/ou (d) avec d'autres composants.

13. Procédé pour influer sur l'intensité d'une impression gustative de substances ayant un goût sucré, désagréable, en particulier de substances ayant un goût amer ou à la fois amer et également désagréable, en particulier amer, comportant les étapes suivantes :
- mélange des composants suivants
(a) - désoxyhespérétine-dihydrochalcone (I)
ou
- un sel de désoxyhespérétine-dihydrochalcone (I) ou un mélange comprenant ou consistant en plusieurs sels de dèsoxyhespérétine-dibydrochalcone (I)
ou
- un mélange comprenant ou consistant en désoxyhespérétine-dihydrochalcone (I) et
un sel ou plusieurs sels de désoxyhespérétine-dihydrochalcone (I),
et
(b) une ou plusieurs autres substances ayant un goût sucré
et/ou
(c) une ou plusieurs substances ayant un goût désagréable, en particulier amer
et/ou
(d) une ou plusieurs substances ayant un goût à la fois sucré et également désagréable, en particulier un goût amer ;
et éventuellement d'autres composants,
les composants (b) à (d) et les autres composants ne contenant ni désoxyhespérétine-dihydrochalcone (I) ni sel de désoxyhespérétine-dihydrochalcone (I) ;
la quantité totale de composants (a) dans le mélange suffit pour influer sur l'intensité de l'impression gustative de la ou des substances ayant un goût sucré (b), de la ou des substance (s) ayant un goût désagréable, en particulier amer (c), ou de la ou des substance(s) ayant un goût à la fois sucré et également désagréable, en particulier amer (d).

14. Procédé selon la revendication 13,
dans lequel la quantité totale de composants (a) dans le mélange suffit
- pour renforcer de façon synergique l'impression gustative sucrée d'une substance ou d'un mélange de substances ayant un goût sucré et/ou
- pour réduire ou masquer l'impression gustative désagréable d'une substance ou d'un mélange de substances ayant un goût désagréable, en particulier l'impression gustative amère d'une substance ou d'un mélange de substances ayant un goût amer et/ou
- pour renforcer de façon synergique l'impression gustative sucrée d'une substance ou d'un mélange de substances ayant un goût à la fois sucré et également désagréable, en particulier amer, et réduire ou masquer l'impression gustative désagréable, en particulier amer, de la substance ou du mélange de substances ayant un goût à la fois sucré et également désagréable, en particulier amer.
